# EUROPEAN PATENT APPLICATION

(11) **EP 4 672 625 A1**
(43) Date of publication of application: **31.12.2025**
(21) Application number: 23923362.0
(22) Date of filing: 23.02.2023
(51) Int. Cl.: H04B 7/04

(54) **SPATIAL FILTER DETERMINATION METHOD AND APPARATUS, DEVICE, CHIP, AND STORAGE MEDIUM**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); SHI, Zhihua, Dongguan, Guangdong 523860 (CN)
(74) Representative: Penza, Giancarlo
(86) International application number: PCT/CN2023/077993
(87) International publication number: WO 2024/174185

(57) **Abstract**

The embodiments of the present application provide a spatial filter determination method, the method comprising: acquiring a measurement result of measuring a downlink reference signal in a first downlink reference signal set, the first downlink reference signal set comprising downlink reference signals between a plurality of cells and a terminal. The measurement result is used for determining a target downlink reference signal from a second downlink reference signal set, and a spatial filter corresponding to the target downlink reference signal is used for downlink transmission between at least one cell among the plurality of cells and the terminal. In the method, the second downlink reference signal set does not need to be directly measured during the process in which the target downlink reference signal is determined from the second downlink reference signal set and a target spatial filter for downlink transmission is further determined, which is thus beneficial for reducing the overhead and latency of determining the spatial filter for downlink transmission when there are a large number of downlink reference signals in the second downlink reference signal set.

## Description

### TECHNICAL FIELD

Embodiments of the present disclosure relate to the field of communication technology, and in particular to a method and an apparatus for determining a spatial filter, a device, a chip and a storage medium.

### BACKGROUND

In current beam management schemes, beam management of a plurality of cells may be supported. However, during a scanning process of downlink spatial beams (pairs), a large number of reference signal measurements is required, resulting in a significant number of downlink resource overheads and a measurement delay. For instance, each Transmission Reception Point (TRP) can be deployed with 64 different downlink transmission directions (which are carried by 64 Synchronization Signal and PBCH Blocks (SSBs)) in a millimeter-wave frequency range (i.e., Frequency Range 2 (FR2)), a terminal uses a plurality of beams (assuming there are 4 different receiving beams per antenna panel) for receiving. Thus, the terminal needs to measure at least 64×4=256 pairs of beams, which means a downlink resource overhead of 256 resources is required. Considering that a total number of serving cells and non-serving cells of the terminal is up to 8, a power consumption and computational overhead of the terminal in a measurement process are aggravated, while the corresponding delay is increased.

Additionally, for an uplink beam management, the terminal can also establish beam-level links with a plurality of cells (including the serving cells and the non-serving cells). Therefore, it is also possible to introduce excessive overheads and delay.

### SUMMARY

Embodiments of the present disclosure provide a method and an apparatus for determining a spatial filter, a device, a chip and a storage medium.

According to a first aspect, there is provided a method for determining a spatial filter in the embodiments of the present disclosure, the method is applied to a terminal, and the method includes that measurement results of measuring downlink reference signals in a first downlink reference signal set are acquired. The first downlink reference signal set includes downlink reference signals between a plurality of cells and the terminal, the measurement results are used to determine one or more target downlink reference signals from a second downlink reference signal set, and one or more spatial filters corresponding to the one or more target downlink reference signals are used for downlink transmission between at least one of the plurality of cells and the terminal.

According to a second aspect, there is provided a method for determining a spatial filter in the embodiments of the present disclosure, the method is applied to a network device, and the method includes that one or more target downlink reference signals are determined. One or more spatial filters corresponding to the one or more target downlink reference signals are used for downlink transmission between at least one of a plurality of cells and a terminal. The one or more target downlink reference signals are determined from a second downlink reference signal set based on measurement results, where the measurement results are obtained by measuring downlink reference signals in a first downlink reference signal set.

According to a third aspect, there is provided a method for determining a spatial filter in the embodiments of the present disclosure, the method is applied to a network device, and the method includes that measurement results of measuring uplink reference signals in a first uplink reference signal set are acquired. The first uplink reference signal set includes uplink reference signals between a plurality of cells and the terminal, the measurement results are used to determine one or more target uplink reference signals from a second uplink reference signal set, and one or more spatial filters corresponding to the one or more target uplink reference signals are used for uplink transmission between at least one of the plurality of cells and the terminal.

According to a fourth aspect, there is provided a method for determining a spatial filter in the embodiments of the present disclosure, the method is applied to a terminal, and the method includes that uplink reference signals in a first uplink reference signal set are sent. The first uplink reference signal set includes uplink reference signals between a plurality of cells and the terminal, the uplink reference signals in the first uplink reference signal set are used to determine one or more target uplink reference signals from a second uplink reference signal set, and one or more spatial filters corresponding to the one or more target uplink reference signals are used for uplink transmission between at least one of the plurality of cells and the terminal.

According to a fifth aspect, there is provided an apparatus for determining a spatial filter in the embodiments of the present disclosure, and the apparatus includes a first acquiring module. The first acquiring module is configured to acquire measurement results of measuring downlink reference signals in a first downlink reference signal set. The first downlink reference signal set includes downlink reference signals between a plurality of cells and the apparatus, the measurement results are used to determine one or more target downlink reference signals from a second downlink reference signal set, and one or more spatial filters corresponding to the one or more target downlink reference signals are used for downlink transmission between at least one of the plurality of cells and the apparatus.

According to a sixth aspect, there is provided an apparatus for determining a spatial filter in the embodiments of the present disclosure, and the apparatus includes a determining module. The determining module is configured to determine one or more target downlink reference signals. One or more spatial filters corresponding to the one or more target downlink reference signals are used for downlink transmission between at least one of a plurality of cells and a terminal. The one or more target downlink reference signals are determined from a second downlink reference signal set based on measurement results, where the measurement results are obtained by measuring downlink reference signals in a first downlink reference signal set.

According to a seventh aspect, there is provided an apparatus for determining a spatial filter in the embodiments of the present disclosure, and the apparatus includes a second acquiring module. The second acquiring module is configured to acquire measurement results of measuring uplink reference signals in a first uplink reference signal set. The first uplink reference signal set includes uplink reference signals between a plurality of cells and the terminal, the measurement results are used to determine one or more target uplink reference signals from a second uplink reference signal set, and one or more spatial filters corresponding to the one or more target uplink reference signals are used for uplink transmission between at least one of the plurality of cells and the terminal.

According to an eighth aspect, there is provided an apparatus for determining a spatial filter in the embodiments of the present disclosure, and the apparatus includes a first sending module. The first sending module is configured to send uplink reference signals in a first uplink reference signal set. The first uplink reference signal set includes uplink reference signals between a plurality of cells and the terminal, the uplink reference signals in the first uplink reference signal set are used to determine one or more target uplink reference signals from a second uplink reference signal set, and one or more spatial filters corresponding to the one or more target uplink reference signals are used for uplink transmission between at least one of the plurality of cells and the terminal.

According to a ninth aspect, there is provided a communication device in the embodiments of the present disclosure. The communication device includes a memory and a processor, where the memory is configured to store computer-executable instructions; the processor is connected to the memory, and is configured to execute the computer-executable instructions to implement the method of any one of the first to fourth aspects.

According to a tenth aspect, there is provided a chip in the embodiments of the present disclosure. The chip includes a processor, which is configured to call and execute a computer program in a memory to cause a device equipped with the chip to implement the method in any of the first aspect to fourth aspect.

According to an eleventh aspect, there is provided a computer-readable storage medium in the embodiments of the present disclosure, where the computer-readable storage medium has stored thereon a computer program, and the computer program is executed by at least one processor to implement the method of any one of the first to fourth aspects.

There is provided the method and apparatus for determining a spatial filter, the chip, the device, and the storage medium in the embodiments of the present disclosure. In a process of determining the one or more target downlink reference signals from the second downlink reference signal set and further determining one or more target spatial filters for downlink transmission, it is not necessary to measure the second downlink reference signal set directly. Instead, the one or more target downlink reference signals are determined from the second downlink reference signal set by measuring the first downlink reference signal set indirectly. Therefore, when there are a larger number of downlink reference signals in the second downlink reference signal set, the method can avoid measuring the vast second downlink reference signal set directly, thereby facilitating the reduction of overheads and delay in determining the spatial filter for downlink transmission. Similarly, in a process of determining the one or more target uplink reference signal from the second uplink reference signal set and further determining one or more target spatial filters for uplink transmission, it is not necessary to measure the second uplink reference signal set directly. Instead, the one or more target uplink reference signals are determined from the second uplink reference signal set by measuring the first uplink reference signal set indirectly. Therefore, when there are a larger number of uplink reference signals in the second uplink reference signal set, it is beneficial to reduce the overheads and delay in determining the spatial filter for uplink transmission.

### BRIEF DESCRIPTION OF THE DRAWINGS

The accompanying drawings illustrated herein are used to provide further understanding of the present disclosure and constitute a part of the present disclosure, and illustrative embodiments of the present disclosure and their description are used to explain the present disclosure, but do not constitute improper limitation to the present disclosure. In the accompanying drawings:
FIG. 1 is a schematic diagram of an application scenario according to an embodiment of the present disclosure.
FIG. 2 is a schematic diagram of an example of downlink beam management in an NR system.
FIG. 3 is a schematic diagram of an example of a neuron structure.
FIG. 4 is a schematic diagram of an example of a neural network.
FIG. 5 is a schematic diagram of an example of a neural network model applicable to an embodiment of the present disclosure.
FIG. 6 is a schematic diagram of another example of a neural network model applicable to an embodiment of the present disclosure.
FIG. 7 is a first schematic diagram of a method for determining a spatial filter provided by an embodiment of the present disclosure.
FIG. 8 is a second schematic diagram of a method for determining a spatial filter provided by an embodiment of the present disclosure.
FIG. 9 is a first schematic flowchart of a possible implementation process of a method for determining a spatial filter provided by an embodiment of the present disclosure.
FIG. 10 is a schematic diagram of an example of an input and an output of a neural network model according to an embodiment of the present disclosure.
FIG. 11 is a schematic diagram of another example of an input and an output of a neural network model according to an embodiment of the present disclosure.
FIG. 12 is a second schematic flowchart of a possible implementation process of a method for determining a spatial filter provided by an embodiment of the present disclosure.
FIG. 13 is a third schematic flowchart of a possible implementation process of a method for determining a spatial filter provided by an embodiment of the present disclosure.
FIG. 14 is a schematic diagram of another example of an input and an output of a neural network model according to an embodiment of the present disclosure.
FIG. 15 is a schematic diagram of another example of an input and an output of a neural network model according to an embodiment of the present disclosure.
FIG. 16 is a first structural diagram of an apparatus for determining a spatial filter provided by an embodiment of the present disclosure.
FIG. 17 is a second structural diagram of an apparatus for determining a spatial filter provided by an embodiment of the present disclosure.
FIG. 18 is a third structural diagram of an apparatus for determining a spatial filter provided by an embodiment of the present disclosure.
FIG. 19 is a fourth structural diagram of an apparatus for determining a spatial filter provided by an embodiment of the present disclosure.
FIG. 20 is a schematic structural diagram of a communication device provided by an embodiment of the present disclosure.
FIG. 21 is a schematic structural diagram of a chip according to an embodiment of the present disclosure.
FIG. 22 is a schematic block diagram of a communication system provided by an embodiment of the present disclosure.

### DETAILED DESCRIPTION

The technical solutions of the embodiments of the present disclosure will be described below in conjunction with the drawings in the embodiments of the present disclosure, and it will be apparent that the described embodiments are part of the embodiments of the present disclosure, but not all of them. Based on the embodiments in the present disclosure, all other embodiments obtained by those of ordinary skill in the art without creative work fall within the scope of protection of the present disclosure.

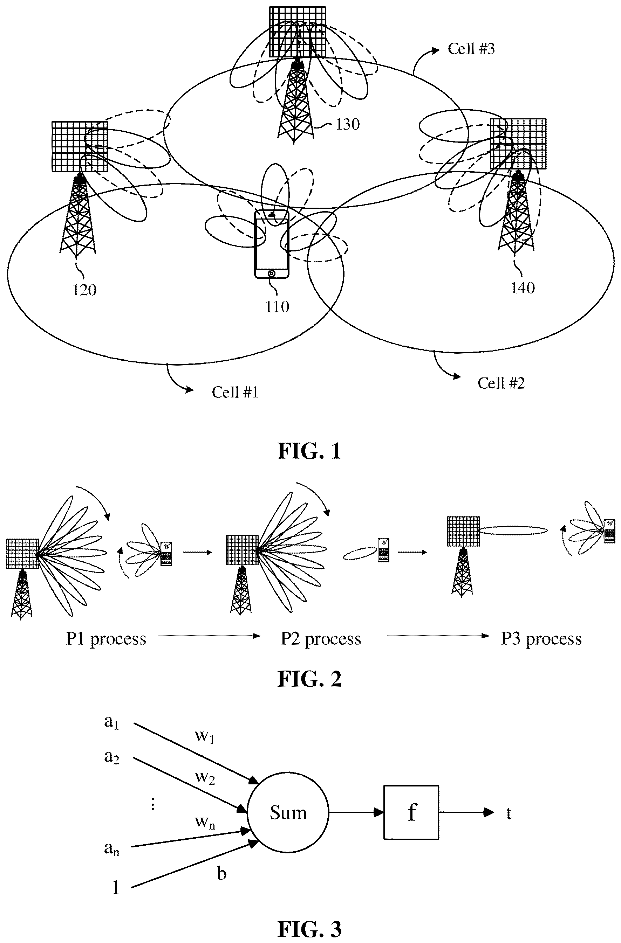

FIG. 1 is a schematic diagram of an application scenario according to an embodiment of the present disclosure.

As illustrated in FIG. 1, a communication system 100 may include a terminal (such as a terminal 110 in FIG. 1) and network devices (such as a network device 120, a network device 130, and a network device 140 in FIG. 1). The network devices may communicate with the terminal through an air interface. Exemplarily, the network device 120, the network device 130, and the network device 140 may be located in different cells, or may serve different cells. For example, in the communication system 100, the network device 120 is located in cell #1, the network device 130 is located in cell #2, and the network device 130 is located in cell #3. The terminal 110 may be located in one or more cells. For example, in the communication system 100, the terminal 110 is located in cell #1. In this scenario, cell #1 is a serving cell of the terminal 110, and cell #2 and cell #3 are non-serving cells of the terminal 110. In an example, the network device may be, for example, a TRP.

In FIG. 1, a union of beams (pairs) indicated by solid lines and dashed lines indicate a universal set of beams (pairs) between each cell and the terminal, beams (pairs) indicated by solid lines are beams (pairs) that need to be measured by the terminal or the network device, and beams (pairs) indicated by dashed lines are beams (pairs) that do not need to be measured by the terminal or the network device, but belong to the universal set of beams (pairs).

It is to be understood that the embodiments of the present disclosure are illustrative only with the communication system 100 but are not limited thereto. That is, the technical solutions of the embodiments of the present disclosure may be applied to various communication systems, for example, a Long Term Evolution (LTE) system, an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, a 5G communication system (also called a New Radio (NR) communication system), or a future communication system, etc.

In the communication system 100 illustrated in FIG. 1, the network devices (e.g., the network device 120, the network device 130, and the network device 140) may be access network devices communicating with the terminal (e.g., the terminal 110). The access network devices may provide communication coverage for a particular geographic area and may communicate with the terminal (e.g. UE) located within a coverage area.

The network device may be an Evolutionary Node B (eNB or eNodeB) in a Long Term Evolution (LTE) system, or a Next Generation Radio Access Network (NG RAN) device, or a base station (gNB) in an NR system, or a radio controller in a Cloud Radio Access Network (CRAN), or the network device may be a macro base station, a micro base station (also referred to as a small station), a satellite, a Radio Network Controller (RNC), a Node B (NB), a Base Station Controller (BSC), a Base Transceiver Station (BTS), a home base station (e.g., Home Evolved NodeB or Home Node B (HNB)), a Baseband Unit (BBU), an Access Point (AP), a wireless relay node, a wireless backhaul node, a Transmission Point (TP), or a Transmission and Reception Point (TRP) in a Wireless Fidelity (WiFi) system, and the like. The network device may also be a relay station, an access point, an in-vehicle device, a wearable device, a hub, a switch, a bridge, a router, or a network device in a future evolving Public Land Mobile Network (PLMN), etc.

The terminal may be any terminal device including but not limited to a terminal device in wired or wireless connection with the network device or other terminal devices.

For example, the terminal may refer to an access terminal, User Equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular phone, a cordless phone, a session initiation protocol (SIP) telephone, an IoT device, a satellite handheld terminal, a wireless local loop (WLL) station, a personal digital assistant (PDA), a handheld device with wireless communication function, a computing device or other processing device connected to a wireless modem, an in-vehicle device, a wearable device, a terminal device in the 5G network or a terminal device in the future evolved network, etc.

The terminal may be used for Device to Device (D2D) communication.

It is to be understood that specific forms of the terminal and the network device are not particularly limited in the embodiments of the present disclosure, and are merely exemplary descriptions herein.

The wireless communication system 100 may also include a core network device (not illustrated in FIG. 1) that communicates with the network device. The core network device may be a 5G Core (5GC) device, for example, an Access and Mobility Management Function (AMF), for another example, an Authentication Server Function (AUSF), for another example, a User Plane Function (UPF), and for another example, a Session Management Function (SMF). Optionally, the core network device may also be an Evolved Packet Core (EPC) device of the LTE network, for example, a Session Management Function + Core Packet Gateway (SMF+PGW-C) device. It is to be understood that SMF+PGW-C can achieve the same functions as SMF and PGW-C simultaneously. In the process of network evolution, the above core network device may also be called by other names, or a new network entity may be formed by dividing the functions of the core network, which is not limited in the embodiments of the present disclosure.

Various functional units in the communication system 100 may also establish connections therebetween through a next generation (NG) interface to realize communication.

For example, the terminal device establishes an air interface connection with the access network device through an NR interface for transmitting user plane data and control plane signaling. The terminal device may establish a control plane signaling connection with an AMF through NG interface 1 (abbreviated as N1). The access network device such as a next generation radio access base station (gNB) may establish a user plane data connection with a UPF through an NG interface 3 (abbreviated as N3). The access network device may establish a control plane signaling connection with the AMF through NG interface 2 (abbreviated as N2). The UPF may establish a control plane signaling connection with an SMF through NG interface 4 (abbreviated as N4). UPF may interact user plane data with a data network through NG interface 6 (abbreviated as N6). The AMF may establish control plane signaling connection with the SMF through NG interface 11 (abbreviated as N11). The SMF may establish a control plane signaling connection with a PCF through NG interface 7 (abbreviated as N7).

FIG. 1 exemplarily illustrates three network devices and one terminal. Optionally, the wireless communication system 100 may include one or more network devices and other numbers of terminal may be included within the coverage of each network device, which is not limited in the embodiments of the present disclosure.

It is to be noted that FIG. 1 is only illustrative of the system to which the present disclosure is applied, and of course, the method illustrated in the embodiments of the present disclosure can also be applied to other systems. In addition, the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects. It is to be understood that the reference to "indicate" in embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B. It is to be understood that "correspond" in the description of embodiments of the present disclosure may mean that there is a direct correspondence or an indirect correspondence relationship between the two, may also mean that there is an association relationship between the two, may also be a relationship between indication and being indicated, configuration and being configured, etc. It should also be understood that the "predefined" or "predefined rules" referred to in embodiments of the present disclosure may be implemented by pre-storing corresponding codes, tables, or other manners that may be used to indicate relevant information in devices (e.g., including terminal devices and network devices), the specific implementation of which is not limited by the present disclosure. For example, predefined may refer to what is defined in the protocol. It should also be understood that, in embodiments of the present disclosure, the "protocol" may refer to standard protocols in the communication field, such as LTE protocol, NR protocol, and related protocols applied in future communication systems, which are not limited herein.

It is to be noted that a "beam (pair)" in the embodiments of the present disclosure may refer to a beam, including a transmitting beam or a receiving beam, or may refer to a pair of beams, such as a pair of a transmitting beam and a receiving beam. The meaning of "beam (pair)" may be applied to both a case of uplink transmission and a case of downlink transmission. In the embodiments of the present disclosure, the "beam (pair)" may also be referred to as a spatial filter.

In a current protocol, the beam management of a plurality of cells may be supported, and the scanning of a large number of downlink spatial beams (pairs) will bring a significant number of reference signal overhead and measurement delay. For instance, each TRP is deployed with 64 different downlink transmission directions (which are carried by up to 64 SSBs) in the FR2. UE uses the plurality of beams (assuming there are 4 different receiving beams per antenna panel) for receiving. Thus, the UE needs to measure at least 64×4=256 pair of beams, which means a downlink resource overhead of 256 resources is required. Considering that a total number of serving cells and non-serving cells is up to 8, the power consumption and computational overhead of the terminal in a measurement process are aggravated, while the corresponding delay is increased. In addition, for an uplink beam management of the plurality of cells, the UE can also establish beam-level links with different cells (including serving cells and non-serving cells), and a relevant scheme has not been determined in the current protocol. Therefore, it is also possible to introduce excessive overheads and delay for the measurement of uplink Sounding Reference Signals (SRSs) (with directivity) based on beam management in different cells (which are distributed in different spatial positions).

In view of this, the embodiments of the present disclosure provide the method and the apparatus for determining a spatial filter, the device, the chip and the storage medium. In the method, for determining a spatial filter for downlink transmission, measurement results of measuring downlink reference signals in a first downlink reference signal set may be obtained to determine one or more target downlink reference signals in a second downlink reference signal set. The first downlink reference signal set includes downlink reference signals between a plurality of cells and a terminal. The spatial filter corresponding to the target downlink reference signal is a spatial filter for downlink transmission between at least one of the plurality of cells and the terminal. That is to say, a spatial filter for downlink transmission between at least one of the plurality of cells and the terminal is determined. Since in a process of determining one or more target downlink reference signals from a second downlink reference signal set, it is not necessary to measure the second downlink reference signal set directly, and the one or more target downlink reference signals are instead determined from the second downlink reference signal set by measuring the first downlink reference signal set indirectly. Therefore, when there are a larger number of downlink reference signals in the second downlink reference signal set, the method can avoid measuring the vast second downlink reference signal set directly, thereby facilitating the reduction of overhead and delay in determining the spatial filter for downlink transmission.

Similarly, for determining a spatial filter for uplink transmission, measurement results of measuring uplink reference signals in a first uplink reference signal set may be obtained to determine one or more target uplink reference signals in a second uplink reference signal set. The first uplink reference signal set includes uplink reference signals between a plurality of cells and a terminal. The spatial filter corresponding to the target uplink reference signal is a spatial filter for uplink transmission between at least one of the plurality of cells and the terminal. That is to say, a spatial filter for uplink transmission between at least one of the plurality of cells and the terminal is determined. Since in a process of determining one or more target uplink reference signals from a second uplink reference signal set, it is not necessary to measure the second uplink reference signal set directly, and the one or more target uplink reference signals are instead determined from the second uplink reference signal set by measuring the first uplink reference signal set indirectly. Therefore, when there are a larger number of uplink reference signals in the second uplink reference signal set, the method can avoid measuring the vast second uplink reference signal set directly, thereby facilitating the reduction of overhead and delay in determining the spatial filter for uplink transmission.

In order to facilitate understanding of the technical solutions of the embodiments of the present disclosure, related technologies of the embodiments of the present disclosure are described as follows. The following related technologies may be arbitrarily combined with the technical solutions of the embodiments of the present disclosure as optional solutions, all of which belong to the protection scope of the embodiments of the present disclosure.

### 1. NR beam management

[A first version (i.e. Rel.15) of an NR system introduced communication in the millimeter wave frequency range, that is, a beam management mechanism was introduced. The beam management may include an uplink beam management and a downlink beam management. The downlink beam management includes processes such as downlink Beam Sweeping, UE beam Measurement and Reporting, and downlink Beam Indication by a network (NW). The uplink beam management includes uplink Beam Sweeping (that is, the UE sends SRS for beam sweeping), NW beam measurement, and uplink beam indication and configuration for the UE.

FIG. 2 is a schematic diagram of an example of downlink beam management in an NR system. Taking a downlink beam scanning process as an example, the downlink beam scanning process may include three processes, namely P1, P2 and P3 processes. P1 process includes that the NW scans different transmitting beams and the UE scans different receiving beams. P2 process includes that the NW scans different transmitting beams and the UE uses a same receiving beam. P3 process includes that the NW uses a same transmitting beam and the UE scans different receiving beams. Typically, P1 process may be performed before the P2 process and P3 process, for example, in the example of FIG. 2, an order of execution may be P1, P2, and P3. In general, the NW completes the above beam scanning process by transmitting a downlink reference signal including an SSB and/or a Channel State Information-Reference Signal (CSI-RS).

A beam reporting mechanism in the NR Rel.15 includes that the UE reports L transmitting beams having the highest L1 Reference Signal Receiving Power (L1-RSRP) and performances of the L transmitting beams to the NW in a form of Channel State Information (CSI) by measuring a plurality of transmitting beams (i.e., P2 process) or a plurality of pairs of transmitting and receiving beams (i.e., P1 process). After decoding beam information reported by the UE, the NW may take into account a downlink transmission channel and signals, and a Transmission Configuration Indicator (TCI) State (including an SSB or CSI-RS resource index as a reference of the UE) is carried through a Media access control (MAC) and/or Downlink Control Information (DCI) signaling, thereby indicating beam information for the UE. The UE performs downlink reception using a receiving beam corresponding to a transmitting beam of the indicated SSB or CSI-RS.

Correspondingly, NR defines three uplink beam sweeping processes, namely U1, U2, and U3 processes. U1 process includes that UE scans different transmitting beams, and NW scans different receiving beams. U2 process includes that the UE uses a same transmitting beam and the NW scans different receiving beams. U3 process includes that the UE scans different transmitting beams and the NW uses a same receiving beam. For the uplink beam sweeping processes, since the NW measures beams from the UE, there is no need for beam reporting by the UE. The NW may select an appropriate uplink beam from measured uplink beams and indicate or configure it to the UE for uplink transmission. At the same time, the NW may prepare a corresponding receiving beam.

### 2. Inter-cell beam management of NR

The inter-cell beam management of NR is only applicable for downlink scenarios.

In the beam management of Rel.17, the NW may configure and/or activate beam management functions for the non-serving cells for the UE according to a capability reported by the UE, and the beam management functions includes beam measurement, beam reporting, and beam indication.

The UE may measure a non-serving cell besides the serving cell, and the non-serving cell has a Physical Cell Identifier (PCI) different from that of the serving cell. The number of measurable non-serving cells supported by the UE capability is 1, 2, 3, or 7. The UE may select a downlink beam with better beam quality by measuring SSBs of the non-serving cell. In a single beam reporting, the UE may only report up to four downlink transmitting beams from one non-serving cell, including resource indices corresponding to the beams and a link quality, such as L1-RSRP.

A beam indication from the non-serving cell may be implemented by the NW through a unified TCI State. For example, the NW may configure, in the TCI State, a reference signal from the non-serving cell (which is identified by PCI). If the TCI state is indicated to the UE, it means that the UE will use a downlink beam from the cell.

### 3. Neural Network (NN)

### 1) Neuron structure

The neural network is an operation model composed of a plurality of neuron nodes connected to each other. The connection between nodes represents a weighted value from an input signal to an output signal, which is called weight. A weighted summation of different input signals is performed at each node and a result is output through a specific activation function. The neuron structure is illustrated in FIG. 3, where a₁, a₂..., aₙ and 1 are inputs of the neurons, w₁, w₂, ..., wₙ and b represent weights, Sum represents a summation function, f represents an activation function, and t represents an output result.

### 2) Deep neural network

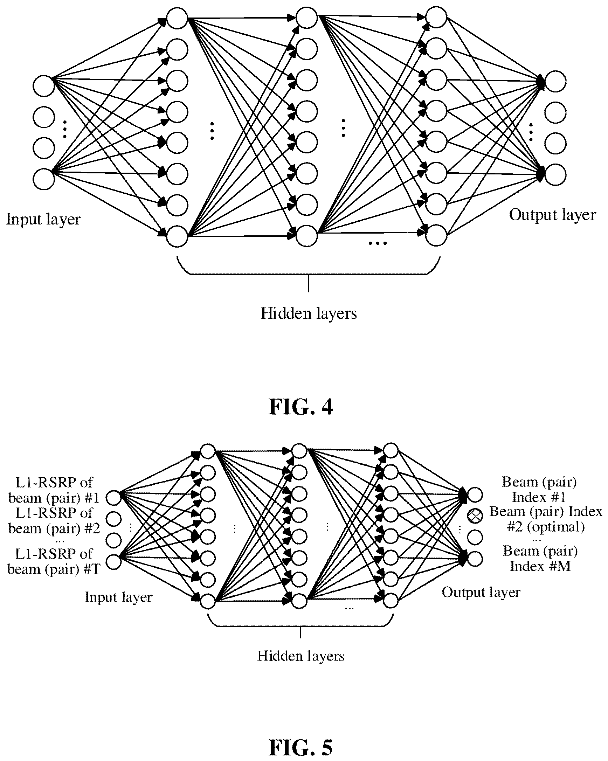

FIG. 4 illustrates a simple neural network. The neural network includes an input layer, hidden layers and an output layer. Through different connection manners of a plurality of neurons, combined with different weights and activation functions, different outputs may be generated, and then a mapping relationship from input to output may be fitted. Exemplarily, each node in a previous layer may be connected to all nodes in a next layer, thus forming a fully connected model. The fully connected model may also be referred to as a Deep Neural Network (DNN). In the embodiments of the present disclosure, the NN model may be used to perform spatial-domain beam prediction.

### 3) How to obtain a model

A NN model may be obtained by being trained through processes of data set construction, training, verification and testing. In the embodiments of the present disclosure, it is assumed that the NN model has been trained in advance by offline training or online training. It is to be noted that offline training and online training are not mutually exclusive. For example, the NW may first obtain a static training result through offline training using a data set, and the process may be called the offline training. During the use of the NN by the NW or UE, as the UE further measures and/or reports, the NN model may continue to collect more data and real-time online training may be performed on the NN model to optimize parameters of the NN model, thereby achieving better inference and prediction results.

The neural network model applicable to the embodiments of the present disclosure will be briefly introduced below.

First, a first reference signal set Set B and a second reference signal set Set A are defined.

**It** is to be noted that a "reference signal" in the embodiments of the present disclosure may also be referred to as a "reference signal resource". A "reference signal set" may be understood as a set of reference signals (such as a set of uplink/downlink reference signals), a set of reference signal resources, or a set of beams (pairs). Therefore, the "reference signal set" may also be referred to as a "reference signal resource set" or a "beam (pair) set".

**In** some scenarios, Set B may be a subset of Set A, where Set B may be understood as a partial subset of beams (pairs), and Set A may be understood as a universal set of beams (pairs). In other scenarios, Set B and Set A may also be two different sets of beams (pairs).

Exemplarily, Set B may serve as a measurement set and Set A may serve as a prediction set. In the embodiments of the present disclosure, the neural network model (abbreviated as a model) may perform spatial-domain beam prediction in Set A by measuring beams in Set B.

FIG. 5 is a schematic diagram of an example of a neural network model applicable to an embodiment of the present disclosure. The model is a model for predicting an optimal beam (pair), and it may be considered that the model solves a multi-class classification problem. The model may be used to fit a relationship between measurement results of Set B (such as L1-RSRP of the reference signals/beams (pairs) in Set B) and L optimal beams (pairs) in Set A. The measurement results of Set B may be used as an input of the model, and an output may be indices of the L optimal beams (pairs) selected from the universal set (Set A), that is, the L beams (pairs) having the highest L1-RSRP in Set A. In the example of FIG. 5, the number of beams (pairs) in Set B is T, the number of beams (pairs) in Set A is M, L=1, and beam (pair) #2 is a beam (pair) having the highest L1-RSRP, that is, beam (pair) #2 is the optimal beam (pair). Labels used by the model are the indices of the L optimal beams (pairs) (i.e., L beams (pairs) having the highest L1-RSRP) measured in the universal set.

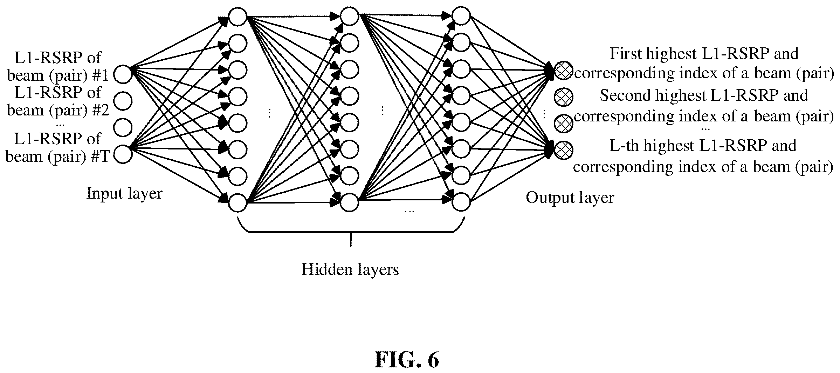

FIG. 6 is a schematic diagram of another example of a neural network model applicable to an embodiment of the present disclosure. The model is a model for predicting an optimal beam quality. It is to be understood that the model solves a linear regression problem. A relationship between an input and an output of the model is a relationship from the input L1-RSRP of the partial subset to L1-RSRP of L optimal beams (pairs). The input of the model illustrated in FIG. 6 is the same as the input of the model illustrated in FIG. 5, and the difference lies in that the output of the model illustrated in FIG. 6 includes L (L≥1) optimal L1-RSRPs, and indices of L beams (pairs) corresponding to the L optimal L1-RSRPs. In the example of FIG. 6, the number of beams (pairs) in Set B is T. Labels used by the model are the L optimal L1-RSRPs measured in the universal set and indices of corresponding L beams (pairs).

**It** is to be understood that the output of the model may also be understood as an inference or prediction result, that is, inference and prediction may have the same meaning and may be replaced with each other.

**In** order to facilitate understanding of the technical solutions of the embodiments of the present disclosure, the technical solutions of the present disclosure will be described in detail by specific embodiments below. The above related technologies may be combined with the technical solutions of the embodiments of the present disclosure arbitrarily as optional solutions, all of which belong to the protection scope of the embodiments of the present disclosure. Embodiments of the present disclosure include at least some of the following.

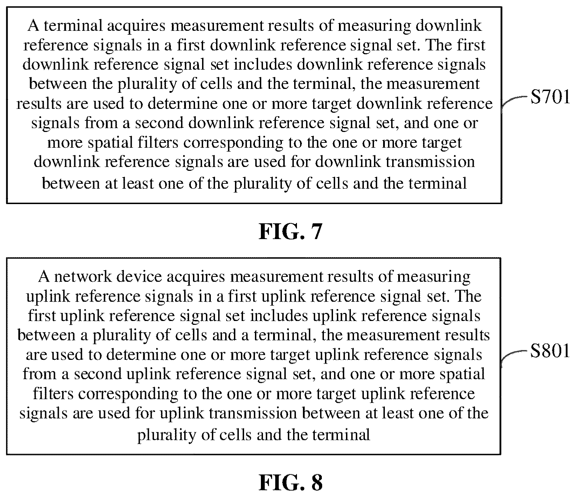

FIG. 7 illustrates a method for determining a spatial filter according to an embodiment of the present disclosure. The method may determine one or more spatial filters for downlink transmission between at least one of a plurality of cells and a terminal. The method may include the following operation S701.

At operation S701, the terminal acquires measurement results of measuring downlink reference signals in a first downlink reference signal set. The first downlink reference signal set includes downlink reference signals between the plurality of cells and the terminal, the measurement results are used to determine one or more target downlink reference signals from a second downlink reference signal set, and one or more spatial filters corresponding to the one or more target downlink reference signals are used for downlink transmission between at least one of the plurality of cells and the terminal.

For convenience of description, the first downlink reference signal set is denoted as Set B and the second downlink reference set is denoted as Set A in the following. Set B may be a subset of Set A, or Set B and Set A may be two different downlink reference signal sets, which is not limited in the embodiments of the present disclosure. A downlink reference signal (or referred to as a downlink reference signal resource) may include, for example, a CSI-RS (or referred to as a CSI-RS resource) and/or an SSB (or referred to as an SSB resource).

In some embodiments, Set B may include N (N≥1) first subsets, where each first subset may correspond to one cell and each cell may correspond to one PCI. Therefore, it may also be understood that each first subset may correspond to one PCI. As an example, a n-th (1≤n≤N) first subset in Set B may be denoted as Set Bₙ. For example, a 1^{st} first subset in Set B may be denoted as Set B₁, and an index of Set B₁ is 1; a 2^{nd} first subset in Set B may be denoted as Set B₂, and an index of Set B₂ is 2, and so on. It is to be understood that an order of the N first subsets in Set B is exemplary, and the order may be changed, which is not limited in the embodiments of the present disclosure.

In some embodiments, Set A may include P (P≥1) second subsets, where each second subset may correspond to one cell and each cell may correspond to one PCI. Therefore, it may also be understood that each second subset may correspond to one PCI. As an example, a p-th (1≤p≤P) second subset in Set A may be denoted as Set Aₚ. For example, a 1^{st} second subset in Set A may be denoted as Set A₁, and an index of Set A₁ is 1; a 2^{nd} second subset in Set A may be denoted as Set A₂, and an index of Set A₂ is 2, and so on. It is to be understood that an order of the P second subsets in Set A is exemplary, and the order may be changed, which is not limited in the embodiments of the present disclosure.

As an implementation, a value of N may be much smaller than P, so that the number of downlink reference signals that need to be actually measured can be reduced greatly, thus achieving a purpose of reducing computational overheads and the time delay.

In the embodiments of the present disclosure, measurement results of measuring the downlink reference signals in Set B may be used to determine the one or more target downlink reference signals from Set A.

Exemplarily, measuring the downlink reference signals in Set B may be performed by the terminal. For example, the network device may send the downlink reference signals in Set B to the terminal, and accordingly, the terminal may receive the downlink reference signals in Set B from the network device, and measure the downlink reference signals in Set B, thereby obtaining measurement results of measuring the downlink reference signals in Set B. As an implementation, the network device may include, for example, base stations of a plurality of cells, so the operation that the terminal receives the downlink reference signals in Set B from the network device may also be understood as being that the terminal receives the downlink reference signals in Set B from the plurality of cells (or the base stations of the plurality of cells).

In a first scenario (hereinafter referred to as scenario 1), the measurement results may be used by the terminal to determine the one or more target downlink reference signals from Set A, or in other words, the determination of the target downlink reference signal may be implemented by the terminal.

In a second scenario (hereinafter referred to as scenario 2), measurement results may be used by the network device to determine the one or more target downlink reference signals from Set A, or in other words, the determination of the target downlink reference signal may be implemented by the network device.

In some embodiments, for scenario 1, the method may further include that: the terminal determines the one or more target downlink reference signals from the second downlink reference signal set based on the measurement results. The measurement results may be, for example, obtained by measuring the downlink reference signals in Set B by the terminal.

In some embodiments, for scenario 2, the method may further include that: the network device receives the measurement results and determines the one or more target downlink reference signals from the second downlink reference signal set based on the measurement results. The measurement results may for example be received by the network device from the terminal.

As an example, the terminal may receive the downlink reference signals in Set B from the network device, measure the downlink reference signals in Set B, and then send the measurement results to network device. Accordingly, the network device may receive the measurement results and determine the one or more target downlink reference signals from the second downlink reference signal set based on the measurement results.

**It** is to be noted that the network device in the embodiments of the present disclosure may include, for example, base stations of a plurality of cells, or may further include other network node(s) capable of communicating with the base stations of the plurality of cells. When the determination of the target downlink reference signal is performed by the network device, the target downlink reference signal may be determined by, for example, a certain base station among the base stations of the plurality of cells, or may also be determined by the network node, which is not limited by the present disclosure.

Exemplarily, the measurement results of measuring the downlink reference signals in Set B may be, for example, measured link qualities corresponding to the downlink reference signals. For example, the measurement results may include, for example, at least one of a Reference Signal Receiving Power (RSRP) (e.g. L1-RSRP), a Signal to Interference plus Noise Ratio (SINR) (e.g. L1-SINR), a Received Signal Strength Indicator (RSSI) (such as L1-RSSI), or a Reference Signal Receiving Quality (RSRQ) (such as L1-RSRQ).

**In** some embodiments, contents of the measurement results may include the following case 1 and case 2.

**In** the case 1, the measurement results include measurement results of measuring the downlink reference signals in all of the first subsets.

The measurement results of measuring the downlink reference signals in all of the first subsets includes measurement results (such as L1-RSRP) corresponding to each downlink reference signal in all of the first subsets. In this case, the terminal can obtain richer measurement results to improve the accuracy in determining the target downlink reference signal.

**In** the case 2, the measurement results include measurement results of measuring the downlink reference signals in part of the first subsets.

The measurement results of measuring the downlink reference signals in part of the first subset includes indices of the part of the first subsets or indices of PCIs corresponding to the part of the first subsets, and measurement results (such as L1-RSRP) corresponding to each downlink reference signal in the part of the first subsets. In this case, the terminal does not need to measure downlink reference signals in all of the first subsets, thereby reducing the delay and overheads in the process of measuring the downlink reference signals.

As an example of the case 2, the measurement results may include an L1-RSRP corresponding to each downlink reference signal in the part of first subsets and indices of the part of first subsets. For example, Set B has a total of 4 first subsets, that is, N=4, and part of the first subsets are Set B₂ and Set B₃, then the measurement results may include a measurement result corresponding to each downlink reference signal in Set B₂ and Set B₃, and index 2 of Set B₂ and index 3 of Set B₃. As another example of the case 2, the measurement results may include an L1-RSRP corresponding to each downlink reference signal in the part of first subsets and indices of PCIs corresponding to the part of first subsets. For example, Set B has a total of 4 first subsets, that is, N=4, and part of the first subsets are Set B₂ and Set B₃, then the measurement results may include a measurement result corresponding to each downlink reference signal in Set B₂ and Set B₃, and an index of PCI corresponding to Set B₂ and an index of PCI corresponding to Set B₃. In a possible case, the measurement results may further include measurement results of measuring part of downlink reference signals in the part of the first subsets.

In some embodiments, for scenario 1 and scenario 2, before the terminal measures the downlink reference signals in Set B, the method may further include that: the terminal sends capability information to the network device. Accordingly, the network device may receive the capability information of the terminal.

Exemplarily, the capability information of the terminal include: whether the terminal supports measuring the downlink reference signals in Set B; and/or whether the terminal supports determining the one or more target downlink reference signals from Set A.

In some embodiments, the capability information sent by the terminal to the network device may further include at least one of capability 1 to capability 6.

Capability 1 is a maximum number of first subsets supported by the terminal on all downlink Carrier Components (CCs) or downlink Bandwidth Parts (BWPs).

As an example, capability 1 may include: a maximum number of first subsets configurable by the terminal on all downlink CCs or downlink BWPs; and/or, a maximum number of first subsets simultaneously measureable by the terminal on all downlink CCs or downlink BWPs.

Capability 2 is a maximum number of second subsets supported by the terminal on all downlink CCs or downlink BWPs.

As an example, capability 1 may include a maximum number of second subsets configurable by the terminal on all downlink CCs or downlink BWPs.

Capability 3 is a maximum number of first subsets supported by the terminal on one downlink CC or downlink BWP.

As an example, capability 3 may include: a maximum number of first subsets configurable by the terminal on one downlink CC or downlink BWP; and/or, a maximum number of first subsets simultaneously measureable by the terminal on one downlink CC or downlink BWP.

Capability 4 is a maximum number of second subsets supported by the terminal on one downlink CC or downlink BWP.

As an example, capability 4 may include a maximum number of second subsets configurable by the terminal on one downlink CC or downlink BWP.

Capability 5 is a maximum number of downlink reference signals measureable by the terminal in each first subset, for example, a maximum number of SSBs and/or CSI-RSs measureable by the terminal in a n-th first subset Set Bₙ.

Capability 6 is a maximum number of target downlink reference signals or a maximum number of spatial filters, which are determinable by the terminal in each second subset, for example, a maximum number of target downlink reference signals predictable by the terminal or a maximum number of spatial filters corresponding to the target downlink reference signals and predictable by the terminal in a p-th prediction set Set Aₚ.

For example, in scenario 1, since the terminal needs to measure the downlink reference signals in Set B and determine the one or more target downlink reference signals from Set A based on the measurement results, in this scenario, the capability information of the terminal may include whether the terminal supports measuring the downlink reference signals in Set B and whether the terminal supports determining the one or more target downlink reference signals from Set A. For the scenario 1, in a case where the terminal supports measuring the downlink reference signals in Set B and supports determining the one or more target downlink reference signals from Set A, the capability information sent by the terminal to the network may further include at least one of the capability 1 to capability 6 described above.

In scenario 2, since the terminal needs to measure the downlink reference signals in Set B, in this scenario, the capability information of the terminal may include whether the terminal supports measuring the downlink reference signals in Set B. For the scenario 2, in a case where the terminal supports measuring the downlink reference signals in Set B, the capability information sent by the terminal to the network may further include at least one of the capability 1, capability 3 or capability 5 described above.

In some embodiments, the capability information of the terminal may be used by the network device to configure the first configuration information and/or the second configuration information for the terminal, or the network device may configure the first configuration information and/or the second configuration information for the terminal based on the capability information, or the first configuration information and/or the second configuration information is related to the capability information of the terminal.

The first configuration information may include position information of the downlink reference signals in Set B, or the first configuration information may include information of reference signal resources associated with the downlink reference signals in Set B, or the first configuration information may include Set B. The first configuration information may be used by the terminal to receive the downlink reference signals in Set B from the network device based on the position information of the downlink reference signals in Set B.

The second configuration information may include position information of the downlink reference signals in Set A, or the second configuration information may include information of reference signal resources associated with the downlink reference signals in Set A, or the second configuration information may include Set A.

In a possible implementation, the network device may configure a plurality of Sets B for the terminal using Radio Resource Control (RRC) signaling, that is, the first configuration information may include position information of downlink reference signals in the plurality of Sets B, and the number of first subsets in each Set B may be different from one another. For example, a certain Set B may include 4 first subsets, i.e. N=4; and for another example, a certain Set B includes, for example, 8 first subsets, i.e. N=8. It is to be understood that the specific value of N in the embodiments of the present disclosure is merely an example, and should not constitute any limitation on the implementation process of the embodiments of the present disclosure.

If the network device configures the plurality of Sets B for the terminal, the network device may activate one of the plurality of Sets B using Media Access Control Control Element (MAC CE) signaling according to an actual deployment situation and an antenna configuration situation, or the terminal may use one of the plurality of Sets B according to an actual application scenario.

After completing the configuration of the Set B, the network device may send first configuration information about the Set B to the terminal. Accordingly, the terminal may receive the first configuration information, and may receive the downlink reference signals in Set B from the network device based on the position information of the downlink reference signals in Set B.

In a possible implementation, the network device may configure a plurality of Sets A for the terminal using RRC signaling, that is, the first configuration information may include position information of downlink reference signals in the plurality of Sets A, and the number of second subsets in each Set A may be different from one another. For example, a certain Set A may include 2 first subsets, i.e. P=2. For another example, a certain Set A includes, for example, 4 second subsets, i.e. P=4. It is to be understood that the specific value of P in the embodiments of the present disclosure is merely an example, and should not constitute any limitation on the implementation process of the embodiments of the present disclosure.

If the network device configures the plurality of Sets A for the terminal, the network device may activate one of the plurality of Sets A using MAC CE signaling according to an actual deployment situation and an antenna configuration situation, or the terminal may use one of the plurality of Sets A according to an actual application scenario.

After completing the configuration of the Set A, the network device may send second configuration information about the Set A to the terminal. Accordingly, the terminal may receive the second configuration information.

For example, in scenario 1, since the terminal needs to measure the downlink reference signals in Set B and determine the one or more target downlink reference signals from Set A based on the measurement results, in this scenario, the network device may send the first configuration information and the second configuration information to the terminal. In scenario 2, since the terminal needs to measure the downlink reference signals in Set B, but does not need to determine the one or more target downlink reference signals from Set A based on the measurement results, in this scenario, the network device may send the first configuration information to the terminal without sending the second configuration information.

The following introduces possible implementations to determine the one or more target downlink reference signals based on the measurement results in the embodiments of the present disclosure. The following implementations may be performed by the terminal (corresponding to scenario 1), or by the network device (corresponding to scenario 2).

In a possible implementation, the operation that the one or more target downlink reference signals are determined from Set A based on the measurement results includes that a link quality prediction result corresponding to each downlink reference signal in Set A is determined based on the measurement results; and the one or more target downlink reference signals are determined based on the link quality prediction result corresponding to each downlink reference signal in Set A.

Exemplarily, the link quality prediction result corresponding to each downlink reference signal in Set A may be, for example, a predicted link quality corresponding to each downlink reference signal. For example, the link quality prediction result may include, for example, at least one of: RSRP (e.g., L1-RSRP), SINR (e.g., L1-SINR), RSSI (e.g., L1-RSSI), or RSRQ (e.g., L1-RSRQ).

In some embodiments, the operation that the link quality prediction result corresponding to each downlink reference signal in Set A is determined based on the measurement results may include that the link quality prediction result corresponding to each downlink reference signal in Set A is determined using a neural network model (abbreviated as a model) based on the measurement results. For example, the terminal or the network device may use Set A as a prediction set of the model, and may use the model to process the measurement results to determine (or predict) the target downlink reference signal in Set A.

The model in the embodiments of the present disclosure may be obtained by being trained by, for example, any existing model training method, and it is assumed that the model used for determining the target downlink reference signal is a trained model herein.

As an implementation, an input of the neural network model includes: a measurement result corresponding to each downlink reference signal in all or part of first subsets; or, indices of all or part of the first subsets, and the measurement result corresponding to each downlink reference signal in all or part of the first subsets.

In an example, the input of the neural network model includes a measurement result corresponding to each downlink reference signal in all of the first subsets. For example, Set B has a total of 4 first subsets, i.e. N=4, then the input of the neural network model may include a measurement result (such as L1-RSRP) corresponding to each downlink reference signal in Set B₁, Set B₂, Set B₃ and Set B₄.

In another example, the input of the neural network model includes a measurement result corresponding to each downlink reference signal in part of the first subsets. For example, Set B has a total of 4 first subsets, that is, N=4, and part of the first subsets are Set B₂ and Set B₃, then the input of the neural network model may include a measurement result (such as L1-RSRP) corresponding to each downlink reference signal in Set B₂ and Set B₃.

In yet another example, the input of the neural network model includes indices of all of the first subsets, and a measurement result corresponding to each downlink reference signal in all of the first subsets. For example, Set B has a total of 4 first subsets, i.e. N=4, then the input of the neural network model may include indices 1, 2, 3, and 4 of Set B₁, Set B₂, Set B₃ and Set B₄, and a measurement result (such as L1-RSRP) corresponding to each downlink reference signal in Set B₁, Set B₂, Set B₃ and Set B₄.

In still another example, the input of the neural network model includes indices of part of the first subsets, and a measurement result corresponding to each downlink reference signal in part of the first subsets. For example, Set B has a total of 4 first subsets, that is, N=4, and part of the first subsets are Set B₂ and Set B₃, then the input of the neural network model may include index 2 of Set B₂ and index 3 of Set B₃, as well as a measurement result (such as L1-RSRP) corresponding to each downlink reference signal in Set B₂ and Set B₃. The advantage of this manner is that a combination of different Sets Bₙ can be flexibly selected as the input of the model, instead of inputting measurement results of all of the first subsets into the model, thus helping to reduce the computational complexity of the model.

As an implementation, the output of the neural network model includes at least one of the following: an index of the target downlink reference signal, an index of a spatial filter corresponding to the target downlink reference signal, or a link quality prediction result (e.g., L1-RSRP) corresponding to the target downlink reference signal. The index of the target downlink reference signal may also be understood as an index of a reference signal resource associated with the target downlink reference signal.

In some embodiments, the target downlink reference signal is a downlink reference signal meeting a condition in Set A, and the condition may include, for example, a link quality prediction result is optimal; and/or, the link quality prediction result is greater than a threshold.

It is to be understood that through the neural network model in the embodiments of the present disclosure, an index of a downlink reference signal in Set A and/or a link quality prediction result corresponding to the downlink reference signal can be obtained according to the above input contents, herein a link quality prediction result of the downlink reference signal is optimal and/or the link quality prediction result of the downlink reference signal is greater than a threshold.

For example, it is assumed that Set A includes three downlink reference signals (or downlink reference signal resources), which are downlink reference signal #1, downlink reference signal #2, and downlink reference signal #3, respectively, and link quality prediction results corresponding to the three downlink reference signals are, for example, prediction result #1, prediction result #2, and prediction result #3, respectively. Then, the determination of the target downlink reference signal may include the following case 1 to case 3.

**In** case 1, the condition includes that the link quality prediction result is optimal. In this case, a downlink reference signal with an optimal link quality prediction result in Set A is the target downlink reference signal.

**It** is to be understood that the number of optimal link quality prediction results is not limited by the embodiment of the present disclosure. For example, the optimal link quality prediction result may refer to L optimal link quality prediction result(s), where L≥1, and downlink reference signal(s) corresponding to the L optimal link quality prediction result(s) are L determined target downlink reference signal(s).

As an example, if L=1, one largest prediction result (i.e., link quality prediction result) may be determined from the prediction result #1, the prediction result #2, and the prediction result #3. Assuming that the prediction result #2 is larger than the prediction result #1 and the prediction result #3, then the downlink reference signal #2 may be determined as the target downlink reference signal.

As another example, if L=2, two largest prediction results may be determined from the prediction result #1, the prediction result #2, and the prediction result #3. Assuming that both the prediction result #2 and the prediction result #3 are larger than the prediction result #1, then the downlink reference signal #2 and the downlink reference signal #3 may be determined as the target downlink reference signals.

**In** case 2, the condition includes that the link quality prediction result is greater than the threshold.

Assuming that both the prediction result #2 and the prediction result #3 are greater than the threshold, and the prediction result #1 is less than or equal to the threshold, then the downlink reference signal #2 and the downlink reference signal #3 may be determined as the target downlink reference signals.

**In** case 3, the condition includes that the link quality prediction result is optimal, and the link quality prediction result is greater than the threshold.

Assuming that the optimal link quality prediction result refers to one optimal link quality prediction result, one largest prediction result may be determined from the prediction result #1, the prediction result #2, and the prediction result #3, and then whether the optimal prediction result is greater than the threshold may be determined. Alternatively, prediction result(s) greater than the threshold may be determined from the prediction result #1, the prediction result #2, and the prediction result #3, and then one largest prediction result may be determined from the prediction result(s). For example, if the prediction result #2 is larger than the prediction result #1 and the prediction result #3, and the prediction result #2 is larger than the threshold, the downlink reference signal #2 may be determined as the target downlink reference signal.

It is to be understood that the above threshold may be a numerical value or a numerical range, which is not limited. The threshold may be a preconfigured fixed value or a value configured dynamically.

In some embodiments, for the above scenario 1, after the terminal determines the target downlink reference signal, the terminal may send first indication information to the network device, and the first indication information may be used to indicate the target downlink reference signal. Accordingly, the network device may receive the first indication information, so that information about the target downlink reference signal may be obtained based on the first indication information.

Exemplarily, the first indication information may include at least one of the following. 1) An index of a second subset in which the target downlink reference signal is located. For example, if a certain target downlink reference signal is a downlink reference signal in Set A₃, then an index of the second subset (Set A₃) in which the target downlink reference signal is located is 3. 2) An index of a PCI corresponding to the second subset in which the target downlink reference signal is located. 3) An index of the target downlink reference signal or an index of a reference signal resource associated with the target downlink reference signal, such as an SSB resource index and/or a CSI-RS resource index. 4) An index of the spatial filter corresponding to the target downlink reference signal. 5) A link quality prediction result (such as L1-RSRP) corresponding to the target downlink reference signal.

In a possible implementation, a plurality of target downlink reference signals may be determined, and the plurality of target downlink reference signals may be sent through same first indication information to save signaling overheads.

According to the method of the embodiments of the present disclosure, the network device may determine the target downlink reference signal(s) in two manners, and further determine the spatial filter(s) corresponding to the target downlink reference signal(s).

For scenario 1, the network device may determine the target downlink reference signal(s) by receiving the first indication information from the terminal, and then determine the spatial filter(s) corresponding to the target downlink reference signal(s).

For scenario 2, the network device may determine the target downlink reference signal(s) from Set A based on the measurement results, and further determine the spatial filter(s) corresponding to the target downlink reference signal(s).

In some embodiments, after the network device determines the spatial filter(s) corresponding to the target downlink reference signal, the method further includes that the network device sends second indication information to the terminal. Accordingly, the terminal may receive the second indication information.

The second indication information may be used to indicate the spatial filter, and the spatial filter corresponds to the target downlink reference signal. The spatial filter may be used for downlink transmission between at least one of the plurality of cells and the terminal. For example, if a target downlink reference signal corresponding to a certain spatial filter is a downlink reference signal in Set A₁, then the spatial filter may be used for the downlink transmission between the cell corresponding to Set A₁ and the terminal. For another example, if a target downlink reference signal corresponding to a certain spatial filter is a downlink reference signal in Set A₂, then the spatial filter may be used for the downlink transmission between the cell corresponding to Set A₂ and the terminal.

In an example, the second indication information may be, for example, a legacy TCI State or a unified TCI State.

According to the method of the embodiments of the present disclosure, the terminal or the network device may acquire measurement results of measuring the downlink reference signals in Set B, and may determine the target downlink reference signal(s) in Set A based on the measurement results, and the spatial filter(s) corresponding to the target downlink reference signal(s) may be used for downlink transmission between at least one of the plurality of cells and the terminal. In the process of determining the one or more target downlink reference signals from Set A, it is not necessary to measure Set A directly. Instead, the one or more target downlink reference signals are determined from Set A by indirectly measuring Set B. Therefore, when the number of downlink reference signals in Set A is larger, the method can avoid measuring the vast Set A directly, and it is thus beneficial to reduce the overheads and delay of determining the spatial filter for downlink transmission.

FIG. 8 illustrates another method for determining a spatial filter according to an embodiment of the present disclosure. The method may determine one oe more spatial filters for uplink transmission between at least one of a plurality of cells and a terminal. The method may include the following operation S801.

At operation S801, a network device acquires measurement results of measuring uplink reference signals in a first uplink reference signal set. The first uplink reference signal set includes uplink reference signals between a plurality of cells and the terminal, the measurement results are used to determine one or more target uplink reference signals from a second uplink reference signal set, and one or more spatial filters corresponding to the one or more target uplink reference signals are used for uplink transmission between at least one of the plurality of cells and the terminal.

For convenience of description, the first uplink reference signal set is denoted as Set D and the second uplink reference set is denoted as Set C in the following. Set D may be a subset of Set C, or Set D and Set C may be two different uplink reference signal sets, which is not limited in the embodiments of the present disclosure. An uplink reference signal (or referred to as an uplink reference signal resource) may include, for example, a Sounding Reference Signal (SRS) (or referred to as an SRS resource).

In some embodiments, Set D may include K (K≥1) third subsets, where each third subset may correspond to one cell and each cell may correspond to one PCI. Therefore, it may also be understood that each third subset may correspond to one PCI. As an example, a k-th (1≤k≤K) third subset in Set D may be denoted as Set Dₖ. For example, a 1^{st} third subset in Set D may be denoted as Set D₁, and an index of Set D₁ is 1; a 2^{nd} third subset in Set D may be denoted as Set D₂, and an index of Set D₂ is 2, and so on. It is to be understood that an order of the K third subsets in Set D is exemplary, and the order may be changed, which is not limited in the embodiments of the present disclosure.

In some embodiments, Set C may include J (J≥1) fourth subsets, where each fourth subset may correspond to one cell and each cell may correspond to one PCI. Therefore, it may also be understood that each fourth subset may correspond to one PCI. As an example, a j-th (1≤j≤J) first subset in Set C may be denoted as Set Cⱼ. For example, a 1^{st} fourth subset in Set C may be denoted as Set C₁, and an index of Set C₁ is 1; a 2^{nd} fourth subset in Set C may be denoted as Set C₂, and an index of Set C₂ is 2, and so on. It is to be understood that an order of the J fourth subsets in Set C is exemplary, and the order may be changed, which is not limited in the embodiments of the present disclosure.

As an implementation, a value of K may be much smaller than J, so that the number of uplink reference signals that need to be actually measured can be reduced greatly, thus achieving a purpose of reducing computational overheads and time delay.

In the embodiments of the present disclosure, measurement results of measuring the uplink reference signals in Set D may be used to determine the one or more target uplink reference signals from Set C.

Exemplarily, measuring the uplink reference signal in Set D may be performed by the network device. For example, the terminal may send the uplink reference signals in Set D to the network device, and accordingly, the network device may receive the uplink reference signals in Set D from the terminal, and measure the uplink reference signals in Set D, thereby obtaining measurement results of measuring the uplink reference signals in Set D. As an implementation, the network device may include, for example, base stations of a plurality of cells, so the operation that the network device receives the uplink reference signals in Set D from the terminal may also be understood as being that the plurality of cells (or the base stations of the plurality of cells) receives the uplink reference signals in Set D from the terminal.

**In** some embodiments, the method may further include that: the network device determines the target uplink reference signal from the second uplink reference signal set based on the measurement results.

**It** is to be noted that the network device in the embodiments of the present disclosure may include, for example, base stations of a plurality of cells, or may further include other network node(s) capable of communicating with the base stations of the plurality of cells. Accordingly, the determination of the target uplink reference signal from Set C may, for example, be performed by a certain base station among the base stations of the plurality of cells, or may also be determined by a network node. As an example, when determining the one or more target uplink reference signal from Set C is implemented by the certain base station among the base stations of the plurality of cells, all measurement results (e.g., measurement results of base stations of all cells) may be aggregated to the base station, so that the base station determines the target uplink reference signal. As another example, when determining the one or more target uplink reference signal from Set C is implemented by the network node described above, all measurement results (e.g., measurement results of base stations of all cells) may be aggregated to the network node, so that the network node determines the target uplink reference signal.

Exemplarily, the measurement results of measuring the uplink reference signals in Set D may be, for example, measured link qualities corresponding to the uplink reference signals. For example, the measurement results may include, for example, at least one of: RSRP (e.g., L1-RSRP), SINR (e.g., L1-SINR), RSSI (e.g., L1-RSSI), and RSRQ (e.g., L1-RSRQ).

**In** some embodiments, before the network device measures the uplink reference signals in Set D, the method may further include that: the terminal sends capability information to the network device. Accordingly, the network device may receive the capability information of the terminal.

Exemplarily, the capability information of the terminal include: whether the terminal supports sending the uplink reference signals in Set D.

In some embodiments, in a case where the terminal supports sending the uplink reference signals in the Set D, the capability information sent by the terminal to the network device may further include at least one of capability 7 to capability 9.

Capability 7 is a maximum number of third subsets supported by the terminal on all uplink CCs or uplink BWPs.

As an example, capability 7 may include: a maximum number of third subsets configurable by the terminal on all uplink CCs or uplink BWPs; and/or, a maximum number of third subsets that the terminal is capable of sending simultaneously on all uplink CCs or uplink BWPs.

Capability 8 is a maximum number of third subsets supported by the terminal on one uplink CC or uplink BWP.

As an example, capability 8 may include: a maximum number of third subsets configurable by the terminal on one uplink CC or uplink BWP; and/or, a maximum number of third subsets that the terminal is capable of sending simultaneously on one uplink CC or uplink BWP.

Capability 9 is a maximum number of uplink reference signals that the terminal is capable of sending in each third subset, for example, a maximum number of SRSs that the terminal is capable of sending in a k-th first subset Set Dₖ.

In some embodiments, the capability information of the terminal may be used for the network device to configure third configuration information for the terminal, or the network device may configure the third configuration information for the terminal based on the capability information, or the third configuration information is related to the capability information of the terminal.

The third configuration information may include position information of the uplink reference signals in Set D, or the third configuration information may include information of reference signal resources associated with the uplink reference signals in Set D, or the third configuration information may include Set D. The third configuration information may be used by the terminal to send the uplink reference signals in Set D to the network device based on the position information of the uplink reference signals in Set D.

In a possible implementation, the network device may configure a plurality of Sets D for the terminal using RRC signaling, that is, the first configuration information may include position information of uplink reference signals in the plurality of Sets D, and the number of third subsets in each Set D may be different.

If the network device configures the plurality of Sets D for the terminal, the network device may activate one of the plurality of Sets D using MAC CE signaling according to an actual deployment situation and an antenna configuration situation, or the terminal may use one of the plurality of Sets D according to an actual application scenario.

After completing the configuration of the Set D, the network device may send the third configuration information about the Set D to the terminal. Accordingly, the terminal may receive the third configuration information, and may send the uplink reference signals in Set D to the network device based on the position information of the uplink reference signals in Set D.

The following introduces possible implementations to determine the one or more target uplink reference signals based on the measurement results in the embodiments of the present disclosure. The following implementations may be performed by the network device.

In a possible implementation, the operation that the one or more target uplink reference signals are determined from Set C based on the measurement results includes that a link quality prediction result corresponding to each uplink reference signal in Set C is determined based on the measurement results; and the one or more target uplink reference signals are determined based on the link quality prediction result corresponding to each uplink reference signal in Set C.

Exemplarily, the link quality prediction result corresponding to each uplink reference signal in Set C may be, for example, a predicted link quality corresponding to each uplink reference signal. For example, the link quality prediction result may include, for example, at least one of: RSRP (e.g., L1-RSRP/SRS-RSRP), SINR (e.g., L1-SINR), RSSI (e.g., L1-RSSI), or RSRQ (e.g., L1-RSRQ).

In some embodiments, the operation that the link quality prediction result corresponding to each uplink reference signal in Set C is determined based on the measurement results may include that the link quality prediction result corresponding to each uplink reference signal in Set C is determined using a neural network model (abbreviated as a model) based on the measurement results. For example, the network device may use Set C as a prediction set of the model, and may use the model to process the measurement results to determine (or predict) the target uplink reference signal in Set C.

The model in the embodiments of the present disclosure may be obtained by being trained by, for example, any existing model training method, and it is assumed that the model used for determining the target uplink reference signal is a trained model herein.

As an implementation, an input of the neural network model includes: a measurement result corresponding to each uplink reference signal in all or part of third subsets; or, indices of all or part of the third subsets, and the measurement result corresponding to each uplink reference signal in all or part of the third subsets.

In an example, the input of the neural network model includes a measurement result corresponding to each uplink reference signal in all of the third subsets. For example, Set D has a total of 4 first subsets, i.e. K=4, then the input of the neural network model may include a measurement result (such as SRS-RSRP) corresponding to each uplink reference signal in Set D₁, Set D₂, Set D₃ and Set D₄.

In another example, the input of the neural network model includes a measurement result corresponding to each uplink reference signal in part of the third subsets. For example, Set D has a total of 4 third subsets, that is, K=4, and part of the third subsets are Set D₂ and Set D₃, then the input of the neural network model may include a measurement result (such as SRS-RSRP) corresponding to each uplink reference signal in Set D₂ and Set D₃.

In yet another example, the input of the neural network model includes indices of all of the third subsets, and a measurement result corresponding to each uplink reference signal in all of the third subsets. For example, Set D has a total of 4 third subsets, i.e. K=4, then the input of the neural network model may include indices 1, 2, 3, and 4 of Set D₁, Set D₂, Set D₃ and Set D₄, and a measurement result (such as SRS-RSRP) corresponding to each uplink reference signal in Set D₁, Set D₂, Set D₃ and Set D₄.

In still another example, the input of the neural network model includes indices of part of the third subsets, and a measurement result corresponding to each uplink reference signal in part of the third subsets. For example, Set D has a total of 4 third subsets, that is, K=4, and part of the third subsets are Set D₂ and Set D₃, then the input of the neural network model may include index 2 of Set D₂ and index 3 of Set D₃, as well as a measurement result (such as SRS-RSRP) corresponding to each uplink reference signal in Set D₂ and Set D₃. The advantage of this manner is that a combination of different Sets Dₖ can be flexibly selected as the input of the model, instead of inputting measurement results of all of the third subsets into the model, thus helping to reduce the computational complexity of the model.

As an implementation, the output of the neural network model includes at least one of the following: an index of the target uplink reference signal, an index of a spatial filter corresponding to the target uplink reference signal, or a link quality prediction result (e.g., SRS-RSRP) corresponding to the target uplink reference signal. The index of the target uplink reference signal may also be understood as an index of a reference signal resource associated with the target uplink reference signal.

In some embodiments, the target uplink reference signal is an uplink reference signal meeting a condition in Set A, and the condition may include, for example, a link quality prediction result is optimal; and/or, the link quality prediction result is greater than a threshold.

That is, through the neural network model in the embodiments of the present disclosure, an index of an uplink reference signal in Set A and/or a link quality prediction result corresponding to the uplink reference signal can be obtained according to the above input contents, herein a link quality prediction result of the uplink reference signal is optimal and/or the link quality prediction result of the uplink reference signal is greater than a threshold.

The threshold may be a numerical value or a numerical range, which is not limited. The threshold may be a preconfigured fixed value or a value configured dynamically.

According to the method of the embodiments of the present disclosure, the network device may determine one or more target uplink references signal, and further determine the one or more spatial filters corresponding to the one or more target uplink reference signals. Further, the method may further include that the network device sends third indication information to the terminal. Accordingly, the terminal may receive the third indication information.

The third indication information may be used to indicate the spatial filter, and the spatial filter corresponds to the target uplink reference signal. The spatial filter may be used for uplink transmission between at least one of the plurality of cells and the terminal. For example, if a target uplink reference signal corresponding to a certain spatial filter is an uplink reference signal in Set C₁, then the spatial filter may be used for the uplink transmission between the cell corresponding to Set C₁ and the terminal. For another example, if a target uplink reference signal corresponding to a certain spatial filter is an uplink reference signal in Set C₂, then the spatial filter may be used for the uplink transmission between the cell corresponding to Set C₂ and the terminal.

In an example, the second indication information may be, for example, legacy Spatial Relation Information (SRI) or a unified TCI State.

According to the method of the embodiments of the present disclosure, the network device may acquire measurement results of measuring the uplink reference signals in Set D, and may determine one or more target uplink reference signal in Set C based on the measurement results, and the one or more spatial filters corresponding to the one or more target uplink reference signals may be used for uplink transmission between at least one of the plurality of cells and the terminal. In the process of determining the one or more target uplink reference signal from Set C, it is not necessary to measure Set C directly. Instead, the one or more target uplink reference signals are determined from Set C by indirectly measuring Set D. Therefore, when the number of uplink reference signals in Set C is larger, the method can avoid measuring the vast Set C directly, and it is thus beneficial to reduce the overheads and delay of determining the spatial filter for uplink transmission.

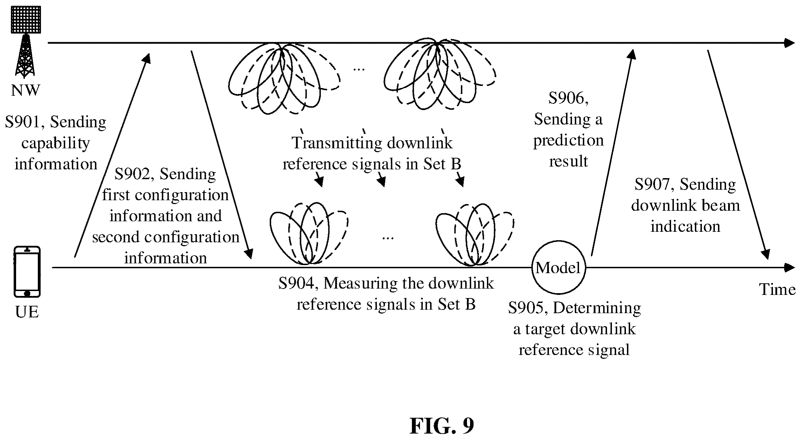

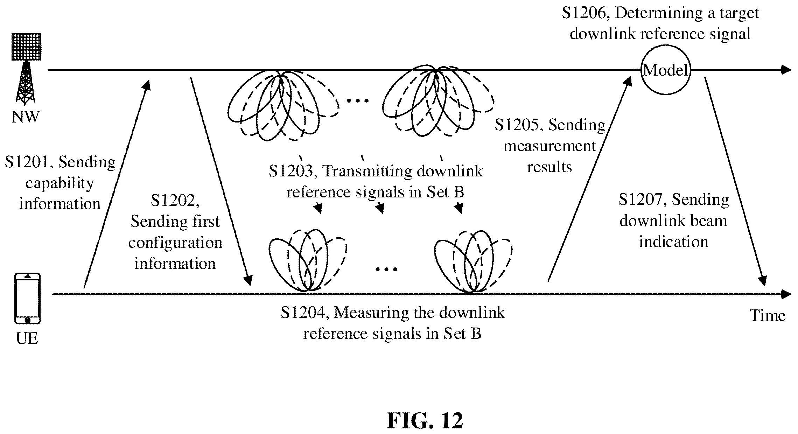

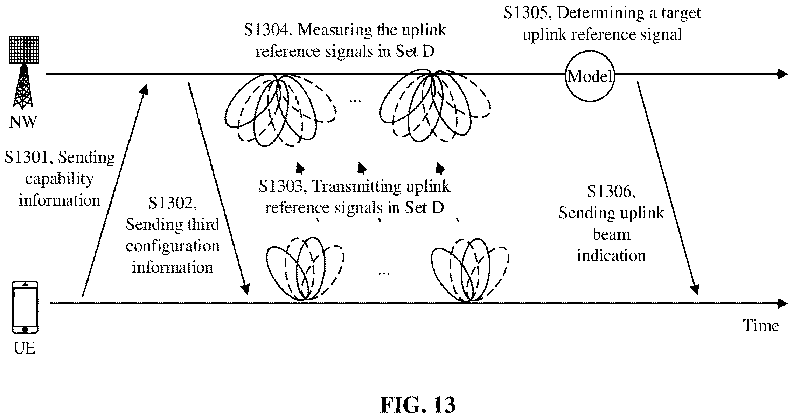

The above introduces the method for determining a spatial filter provided by the embodiments of the present disclosure in combination with FIG. 7 and FIG. 8. In order to facilitate understanding of the embodiments of the present disclosure, a possible implementation flow of the method for determining a spatial filter provided by the embodiments of the present disclosure will be described below with reference to FIG. 9 to FIG. 15. The method illustrated in FIG. 9 and FIG. 12 may determine one or more spatial filters for downlink transmission between at least one of the plurality of cells and the terminal. The method illustrated in FIG. 13 may determine one or more spatial filters for uplink transmission between at least one of the plurality of cells and the terminal.

For convenience of description, a "spatial filter" is denoted hereinafter by "beam (pair)". In other words, in some scenarios, the "beam (pair)" and "spatial filter" hereinafter may be replaced with each other.

In FIG. 9 and FIG. 12, beams (pairs) indicated by solid lines are beams (pairs) corresponding to downlink reference signals in the first downlink reference signal set (i.e., Set B), which are also beams (pairs) that the terminal needs to actually measure. Beams (pairs) indicated by dashed lines are beams (pairs) that the terminal has not measured but belong to the downlink reference signals corresponding to the second downlink reference signal set (i.e., Set A). It is to be understood that a union of beams (pairs) represented by the dashed lines and the solid lines are beams (pairs) corresponding to downlink reference signals in Set A.

Set B includes downlink reference signals between a plurality of cells and UE, and Set B may also be referred to as a measurement set, a measurement set of downlink reference signals, or a measurement set of downlink beams (pairs). Set A may also be referred to as a prediction set, or a prediction set of downlink reference signals, or a prediction set of downlink beams (pairs).

FIG. 9 is a schematic flowchart of a possible implementation process of a method for determining a spatial filter provided by an embodiment of the present disclosure. The implementation process may include the following operations.

At operation S901, the terminal (i.e., UE) sends capability information to the network device (i.e., NW).

Before the NW configures measurement resources (i.e., Set B) and a prediction set (i.e., Set A) required by the model for the UE, the UE needs to inform the NW through capability reporting whether the UE supports the measurement and prediction of downlink beams (pairs) of a plurality of cells using the UE-side model in a spatial domain. That is, the capability information of the UE include: whether the UE supports measuring the downlink reference signals in Set B, and whether the UE supports determining the one or more target downlink reference signals from Set A.

Set B may include, for example, N first subsets. As an example, a n-th (1≤n≤N) first subset in Set B may be denoted as Set Bₙ. That is, Set B may be understood as a measurement set of beams (pairs) including all N first subsets, i.e., the measurement set Set B of beams (pairs) includes Set B₁, Set B₂, ..., Set B_{N}, or Set B is a union of Set B₁, Set B₂, ..., Set B_{N}.

For example, Set A may include P second subsets. For example, a p-th (1≤p≤P) second subset in Set A may be denoted as Set Aₚ. That is, Set A may be understood as a measurement set of beams (pairs) including all P second subsets, i.e., the measurement set Set A of beams (pairs) includes Set A₁, Set A₂, ..., Set A_{P}, or Set A is a union of Set A₁, Set A₂, ..., Set A_{P}.

In the embodiments of the present disclosure, each first subset may correspond to one cell, each second subset may also correspond to one cell, and each cell may correspond to one PCI.

In a case where the UE supports measuring the downlink reference signals in Set B and supports determining the one or more target downlink reference signals from Set A, the capability information reported by the UE includes, but is not limited to, at least one of the following:
1) a maximum number of first subsets supported by the UE on all downlink CCs/BWPs, for example, a maximum number of first subsets configurable by the UE, and for another example, a maximum number of first subsets simultaneously measureable by the UE;
2) a maximum number of second subsets supported by the UE on all downlink CCs/BWPs, for example, a maximum number of second subsets configurable by the UE;
3) a maximum number of first subsets supported by the UE on one downlink CC/BWP;
4) a maximum number of downlink reference signals measureable by the UE in each first subset, for example, a maximum number of SSB resources and/or CSI-RS resources measureable by the UE in a n-th first subset Set Bₙ;
5) a maximum number of second subsets supported by the UE on one downlink CC/BWP; or
6) a maximum number of target downlink reference signals and/or downlink beams (pairs) predictable by the UE in each second subset, for example, a maximum number of target downlink reference signals and/or downlink beams (pairs) predictable by the UE in a p-th prediction set Set Aₚ.

At operation S902, the NW sends first configuration information and second configuration information to the UE. Accordingly, the UE receives the first configuration information and the second configuration information.

The first configuration information may include position information of the downlink reference signals in Set B, or the first configuration information may include information of reference signal resources associated with the downlink reference signals in Set B, or the first configuration information may include Set B. The second configuration information may include position information of the downlink reference signals in Set A, or the second configuration information may include information of reference signal resources associated with the downlink reference signals in Set A, or the second configuration information may include Set A. The downlink reference signals may include, for example, a CSI-RS and/or an SSB.

In operation S902, the NW may configure and/or activate the measurement set Set B for the UE.

As an example, the NW may configure one or more Sets B for the UE using RRC signaling. Set B, as the measurement set of downlink beams (pairs), may include downlink reference signals (or downlink reference signal resources), such as CSI-RS resources and/or SSB resources.

Each Set B may include a set of first subsets (e.g., N first subsets), and the number of first subsets in each Set B may be different, that is, a value of N may be different for each Set B. For example, if a certain Set B includes, for example, 4 first subsets, i.e. N=4, then the first subsets in the Set B may be denoted as Set B₁, Set B₂, Set B₃, and Set B₄, respectively. As another example, if a certain Set B includes, for example, 8 first subsets, i.e., N=8, then the first subsets in the Set B may be denoted as Set B₁, Set B₂, ..., Set B₈, respectively.

It is to be understood that the specific value of N in the embodiments of the present disclosure is merely an example, and should not constitute any limitation on the implementation process of the embodiments of the present disclosure.

If the NW configures a plurality of Sets B for the UE, the NW may activate one Set B in the plurality of configured Sets B using MAC CE signaling according to an actual deployment situation and an antenna configuration situation. Alternatively, the UE may use one configured Set B.

After completing the configuration of the Set B, the NW may send the first configuration information about the Set B to the UE.

In operation S902, the NW also may configure and/or activate the prediction set Set A for the UE.

As an example, the NW may configure one or more Sets A for the UE using RRC signaling. Set A, as the prediction set of downlink beams (pairs), may include downlink reference signals (or downlink reference signal resources), such as CSI-RS resources and/or SSB resources.

Each Set A may include a set of second subsets (e.g., P second subsets), and the number of second subsets in each Set A may be different, that is, a value of P may be different for each Set A. For example, if a certain Set A includes, for example, 2 second subsets, i.e. N=2, then the second subsets in the Set A may be denoted as Set A₁ and Set A₂, respectively. As another example, if a certain Set A includes, for example, 4 second subsets, i.e., N=4, then the second subsets in the Set A may be denoted as Set A₁, Set A₂, ..., Set A₃, respectively.

If the NW configures a plurality of Sets A for the UE, the NW may activate one Set A in the plurality of configured Sets A using MAC CE signaling according to an actual deployment situation and an antenna configuration situation. Alternatively, the UE may use one configured Set A.

It is to be understood that the specific value of P in the embodiments of the present disclosure is merely an example, and should not constitute any limitation on the implementation process of the embodiments of the present disclosure.

After completing the configuration of the Set A, the NW may send the second configuration information about the Set A to the UE.

At operation S903, the NW transmits the downlink reference signals in Set B to the UE.

After configuring and/or activating Set B for the UE, the NW may send the downlink reference signals in Set B to the UE. The NW may include, for example, base stations (or receivers) of a plurality of cells, so the operation that the NW sends the downlink reference signals in Set B to the UE may also be understood as being that the base stations of the plurality of cells (including a current serving cell and non-serving cells of the UE) send the downlink reference signals in Set B to the UE.

Taking FIG. 9 as an example, each group (or cluster) of beams may correspond to one cell/first subset/second subset. On the NW side, solid lines indicate transmitting beams used by a base station of each cell when sending the downlink reference signals in Set B to the UE, and dashed lines indicate beams that are not used but belong to beams corresponding to the downlink reference signals in Set A. On the UE side, solid lines indicate receiving beams used by UE when receiving the downlink reference signals from the base station of each cell, and dashed lines indicate beams that are not used but belong to beams corresponding to the downlink reference signals in Set A.

At operation S904, the UE measures the downlink reference signals in Set B.

In order to find an optimal downlink beam (pair) from the plurality of cells to serve the UE, the UE may measure reference signals in a measurement set Set Bₙ (1≤n≤N) from the plurality of cells (including a current serving cell and non-serving cells of the UE) to obtain the measurement results.

Taking FIG. 9 as an example, beams (pairs) indicated by solid lines are beams (pairs) corresponding to the downlink reference signals in Set B, which are also beams (pairs) that the terminal needs to measure actually. Beams (pairs) indicated by dashed lines are beams (pairs) corresponding to the downlink reference signals that the terminal has not measured but belong to Set A.

In the embodiments of the present disclosure, the measurement results may be, for example, a link quality corresponding to a downlink reference signal, such as at least one of L1-RSRP, L1-SINR, L1-RSSI, or L1-RSRQ.

It is to be noted that if the total number of cells is M, the value of M and the value of N may or may not be equal. For example, M=4, N=2, in which case the UE may measure first subsets corresponding to 2 cells in 4 cells.

In some embodiments, Set B may be a subset of Set A. For example, in FIG. 1, the UE may measure downlink reference signals in Set B₁ corresponding to a serving cell (i.e., cell #1), and may also measure downlink reference signals in Set B₂ and Set B₃ corresponding to non-serving cells (i.e., cells #2 and cell #3). The beams (pairs) corresponding to the downlink reference signals in Set B₁, Set B₂ and Set B₃ are represented by solid lines, that is, the solid lines represent the beams (pairs) corresponding to reference signals measured by UE actually. The beams (pairs) corresponding to reference signals not measured by the UE but belonging to the prediction set Set A are indicated by dashed lines. The set of reference signals represented by solid lines and dashed lines is the prediction set Set A.

Considering an ability of the UE to perform beamforming, the measurement of reference signals corresponding to different cells is often not performed simultaneously, and may be performed at different times.

At operation S905, the UE determines a target downlink reference signal from Set A based on the measurement results.

A beam (pair) corresponding to the target downlink reference signal is an optimal beam (pair), and the optimal beam (pair) may be used for downlink transmission between at least one of the plurality of cells and the UE.

Exemplarily, a neural network model may be employed to predict the target downlink reference signal in Set A. The neural network model may also be referred to as an Artificial Intelligence (AI) model or a Machine Learning (ML) model. In the embodiments of the present disclosure, the neural network model (abbreviated as a model) may be deployed on the UE side, and the UE may use the measurement results of measuring the downlink reference signals in Set B as an input of the model, and predict a link quality prediction result corresponding to the target downlink reference signal in Set A through the model.

The link quality prediction result in the embodiments of the present disclosure may include, for example, at least one of L1-RSRP, L1-SINR, L1-RSSI or L1-RSRQ.

By using the trained model to predict the target downlink reference signal in Set A, it is possible to select the optimal downlink beam (pair) in a global manner even within a limited measurement range.

As an example, the input of the model may include, for example, the following input manner 1 and input manner 2.

In the input manner 1, measurement results corresponding to all downlink reference signals in all or part of the first subsets are input in a fixed order. That is, measurement results of measuring all downlink reference signals in all or part of Sets Bₙ are input in a fixed order.

In the input manner 2, indices of all or part of the first subsets, as well as the measurement result corresponding to each downlink reference signal in all or part of the first subsets, are input. That is, indices n of all or part of Sets Bₙ, as well as measurement results corresponding to the downlink reference signals in all or part of Sets Bₙ, are input. The advantage of this manner is that a combination of different Sets Bₙ can be flexibly selected as the input of the model.

As an example, the output of the model may include, for example, at least one of output manner 1 to output manner 3.

**In** the output manner 1, an index of the target downlink reference signal is output. The index of the target downlink reference signal may also be understood as an index of a reference signal resource associated with the target downlink reference signal.

**In** the output manner 2, an index of a beam (pair) corresponding to the target downlink reference signal is output.

**In** the output manner 3, a link quality prediction result corresponding to the target downlink reference signal is output.

For example, the target downlink reference signal may be a downlink reference signal meeting a condition selected from Set A using the model, and the condition may include, for example, a link quality prediction result is optimal, and/or, the link quality prediction result is greater than a threshold. It is to be understood that the number of optimal link quality prediction results is not limited in the embodiments of the present disclosure. For example, the optimal link quality prediction result may refer to L optimal link quality prediction result(s), where L≥1, and downlink reference signal(s) corresponding to the L optimal link quality prediction result(s) is/are L selected target downlink reference signal(s).

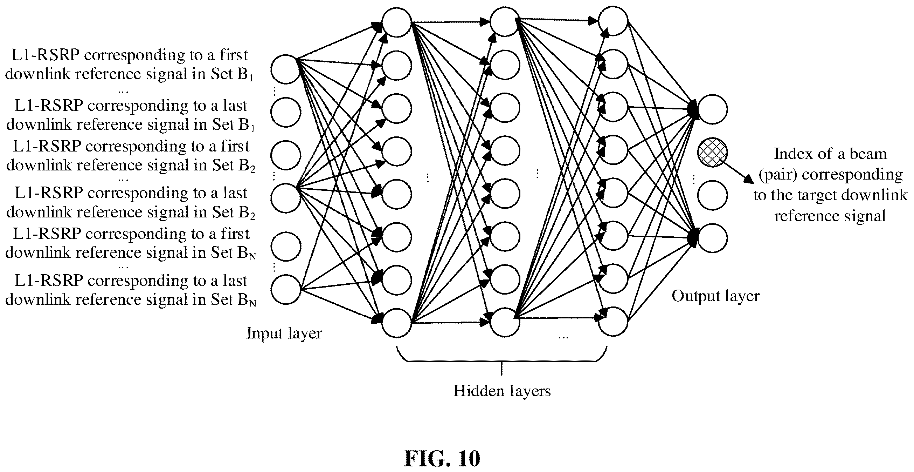

FIG. 10 is a schematic diagram of an example of an input and an output of a neural network model according to an embodiment of the present disclosure. The UE may use measurement results (such as L1-RSRP) corresponding to all downlink reference signals in all or part of the Sets Bₙ in a fixed order as the input of the model (i.e., the input manner 1 is adopted), and may determine the one or more target downlink reference signals from all Sets Aₚ, and then use, as the output of the model, an index of a beam (pair) corresponding to the target downlink reference signal, or indices of L optimal downlink beam(s) (pair(s)) predicted by the model (i.e., output manner 2 is adopted). In the example of FIG. 10, L=1.

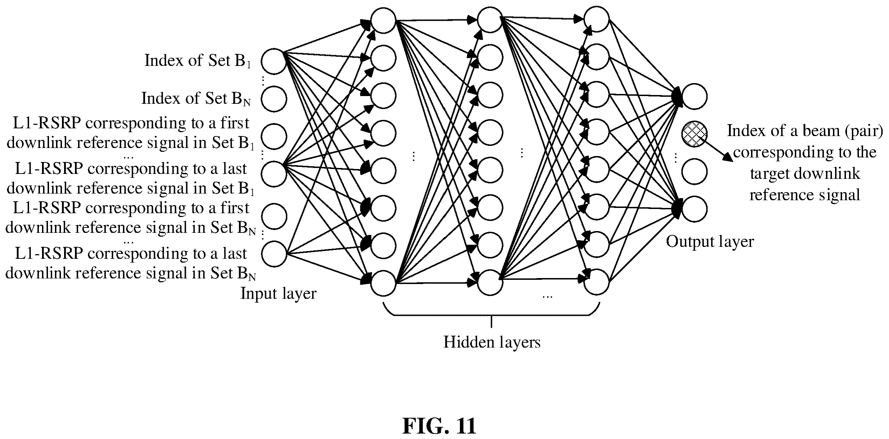

FIG. 11 is a schematic diagram of another example of an input and an output of a neural network model according to an embodiment of the present disclosure. The UE may use indices n of all or part of the Sets Bₙ, as well as a measurement result (such as L1-RSRP) corresponding to each downlink reference signal in all or part of the Sets Bₙ as the input of the model (i.e., the input manner 2 is adopted). That is, in addition to the measurement result corresponding to each downlink reference signal in all or part of the Sets Bₙ, the indices of all or part of the Sets Bₙ may be used as additional input information for the model. As such, the UE may perform measurement flexibly (such as measuring only part of Sets Bₙ) and select measurement results to be input, without having to input measurement results of all of the Sets Bₙ into the model each time. In the example of FIG. 11, L=1, and a prediction result of the model is output using the output manner 2.

Through the above manner, the UE-side model may predict a downlink transmitting beam, or may also predict a pair of downlink beams including a downlink transmitting beam and a downlink receiving beam.

At operation S906, the UE sends (or reports) the prediction result to the NW. Accordingly, the NW receives the prediction result.

Exemplarily, for the model prediction result (i.e., L optimal downlink beams (pairs)), the UE may report the prediction result of the model to the NW in one beam reporting.

In a possible implementation, the UE needs to report an index of Set Aₚ to which the target downlink reference signal belongs, as well as an index of a resource corresponding to the target downlink reference signal, such as an SSB index (i.e., SSB resource Indicator (SSBRI) and/or a CSI-RS index (i.e., CSI-RS Resource Indicator (CRI)), and report a link quality prediction result corresponding to the target downlink reference signal, such as L1-RSRP.

At present, there is no PCI reporting in the related art, because the NW performs configuration through RRC, so that optimal beams reported by the UE all come from the same cell, and thus PCIs are the same. In the embodiments of the present disclosure, in order to report predicted optimal beams (pairs) of a plurality of cells, different PCIs may be reported. As an example, reporting formats illustrated in Table 1 and/or Table 2 may be used for reporting.

**Table 1 Reporting format 1 of prediction results**

| CSI report number | CSI fields |
|---|---|
| CSI report #n | PCI #1 or Set A1 index, if reported |
| | PCI #2 or Set A2 index, if reported |
| | PCI #3 or Set A3 index, if reported |
| | PCI #4 or Set A4 index, if reported |
| | CRI or SSBRI #1, if reported |

As illustrated in Table 1, the UE may directly report the PCI corresponding to the cell to which the target downlink reference signal belongs, or may further report the index of the cell to which the target downlink reference signal belongs.

**Table 2 Reporting format 2 of prediction results**

| CSI report number | **CSI** fields |
|---|---|
| CSI report #n | PCI #1 or Set A₁ index, if reported |
| | PCI #2 or Set A₂ index, if reported |
| | PCI #3 or Set A₃ index, if reported |
| | PCI #4 or Set A₄ index, if reported |
| | Beam (pair) index #1, if reported |
| | Beam (pair) index #2, if reported |
| | Beam (pair) index #3, if reported |
| | Beam (pair) index #4, if reported |
| | RSRP #1, if reported |
| | Differential RSRP #2, if reported |
| | Differential RSRP #3, if reported |
| | Differential RSRP #4, if reported |

As illustrated in Table 2, the UE may also report the index of the predicted optimal downlink beam (pair).

At operation S907, the NW sends downlink beam indication to the UE. Accordingly, the UE receives the downlink beam indication.

By determining the target downlink reference signal, NW may determine a beam (pair) (i.e., an optimal downlink beam (pair)) corresponding to the target downlink reference signal. Further, the NW may send the downlink beam indication to the UE to indicate the optimal downlink beam (pair).

In a possible implementation, the NW may perform downlink beam indication to the UE using a legacy TCI State or a unified TCI State. Reference signals from the serving cell and/or the non-serving cell may be included in the TCI State. The TCI State may be used to indicate a Quasi-Co-Located (QCL) relationship between reference signals. The QCL relationship includes a QCL relationship between a downlink reference signal (such as a CSI-RS or SSB reported by UE) on a specific BWP under a specific CC and a Physical Downlink Shared Channel (PDSCH) Demodulation Reference Signal (DMRS), a Physical Downlink Control Channel (PDCCH) DMRS, as well as a CSI-RS.

By receiving the downlink beam indication, the UE may determine a receiving beam, and may receive downlink data from at least one of the plurality of cells through the receiving beam.

FIG. 12 is a schematic flowchart of another possible implementation process of a method for determining a spatial filter provided by an embodiment of the present disclosure. The implementation process may include the following operations.

At operation S1201, the UE sends capability information to the NW.

Before the NW configures measurement resources (i.e., Set B) required by the model for the UE, the UE needs to inform the NW through capability reporting whether the UE supports the measurement of downlink beams (pairs) of a plurality of cells at UE-side in a spatial domain. That is, the capability information of the UE include: whether the UE supports measuring the downlink reference signals in Set B.

For example, Set B may include N first subsets, where each first subset may correspond to one cell and each cell may correspond to one PCI. As an example, a n-th (1≤n≤N) first subset in Set B may be denoted as Set Bₙ.

In a case where the UE supports measuring the downlink reference signals in Set B, the capability information reported by the UE includes, but is not limited to, at least one of the following:
1) a maximum number of first subsets supported by the UE on all downlink CCs/BWPs, for example, a maximum number of first subsets configurable by the UE, and for another example, a maximum number of first subsets simultaneously measureable by the UE;
2) a maximum number of first subsets supported by the UE on one downlink CC/BWP; or
3) a maximum number of downlink reference signals measureable by the UE in each first subset, for example, a maximum number of SSB resources and/or CSI-RS resources measureable by the UE in a n-th first subset Set Bₙ.

At operation S1202, the NW sends first configuration information to the UE. Accordingly, the UE receives the first configuration information.

The first configuration information may include position information of the downlink reference signals in Set B, or the first configuration information may include information of reference signal resources associated with the downlink reference signals in Set B, or the first configuration information may include Set B. The downlink reference signal resources may include, for example, a CSI-RS resource and/or an SSB resource.

In operation S 1202, the NW may configure and/or activate the measurement set Set B for the UE.

As an example, the NW may configure one or more Sets B for the UE using RRC signaling. Set B, as the measurement set of downlink beams (pairs), may include downlink reference signals (or downlink reference signal resources), such as CSI-RS resources and/or SSB resources. Each Set B may include a set of first subsets (e.g., N first subsets), and the number of first subsets in each Set B may be different, that is, a value of N may be different for each Set B. The specific value of N is not limited in the embodiments of the present disclosure.

If the NW configures a plurality of Sets B for the UE, the NW may activate one Set B in the plurality of configured Sets B using MAC CE signaling according to an actual deployment situation and an antenna configuration situation. Alternatively, the UE may use one configured Set B.

After completing the configuration of the Set B, the NW may send the first configuration information about the Set B to the UE.

At operation S1203, the NW transmits the downlink reference signals in Set B to the UE.

After configuring and/or activating Set B for the UE, the NW may send the downlink reference signals in Set B to the UE. The NW may include, for example, base stations (or receivers) of a plurality of cells, so the operation that the NW sends the downlink reference signals in Set B to the UE may also be understood as being that the base stations of the plurality of cells (including a current serving cell and non-serving cells of the UE) send the downlink reference signals in Set B to the UE.

Taking FIG. 12 as an example, each group (or cluster) of beams may correspond to one cell/first subset/second subset. On the NW side, solid lines indicate transmitting beams used by a base station of each cell when sending the downlink reference signals in Set B to the UE, and dashed lines indicate beams that are not used but belong to beams corresponding to the downlink reference signals in Set A. On the UE side, solid lines indicate receiving beams used by UE when receiving the downlink reference signals from the base station of each cell, and dashed lines indicate beams that are not used but belong to beams corresponding to the downlink reference signals in Set A.

At operation S1204, the UE measures the downlink reference signals in Set B.

In operation S1204, the UE may measure downlink reference signals in measurement sets Sets Bₙ (1≤n≤N) from the plurality of cells (including a current serving cell and non-serving cells of the UE) to obtain the measurement results.

Taking FIG. 12 as an example, beams (pairs) indicated by solid lines are beams (pairs) corresponding to the downlink reference signals in Set B, which are also beams (pairs) that the terminal needs to actually measure. Beams (pairs) indicated by dashed lines are beams (pairs) corresponding to the downlink reference signals that the terminal has not measured but belong to Set A.

In the embodiments of the present disclosure, the measurement results may be, for example, a link quality corresponding to a downlink reference signal, such as at least one of L1-RSRP, L1-SINR, L1-RSSI, or L1-RSRQ.

It is to be noted that if the total number of cells is M, the value of M and the value of N may or may not be equal. For example, if M=4, N=2, in which case the UE may measure first subsets corresponding to 2 cells in 4 cells. Considering an ability of the UE to perform beamforming, the measurement of reference signals corresponding to different cells is often not performed simultaneously, and may be performed at different times.

At operation S1205, the UE sends the measurement results to the NW. Accordingly, the NW receives the measurement results.

In order to achieve the prediction of downlink beams (pairs) by the NW-side model, the UE needs to report the measurement results of a measurement sets Sets Bₙ (1≤n≤N) of a plurality of cells to the NW as the input of the model. The embodiments of the present disclosure have designed the following reporting formats.

The format in which the UE reports the measurement results to the NW includes at least one of a reporting format 1 to a reporting format 3.

A reporting format 1 reports measurement results of measuring the downlink reference signals in all of the first subsets, for example, the UE may report measurement results of first subsets corresponding to all cells in a preset order.

In the reporting format, an index of the first subset Set Bₙ may be omitted, or an index of a resource in the first subset Set Bₙ may be omitted. It is only necessary to report the measurement result corresponding to each downlink reference signal in all of the first subsets.

In a reporting format 2, measurement results of measuring the downlink reference signals in part/all of the first subset include indices of the part/all of the first subsets or indices of PCIs corresponding to the part/all of the first subsets, and a measurement result corresponding to each downlink reference signal in the part/all of the first subsets.

In the reporting format, the UE may report the measurement results of part or all of the first subsets flexibly. In this case, the UE may report the index of the first subset Set Bₙ or the PCI corresponding to the first subset Set Bₙ, as well as the measurement result (i.e., link quality) corresponding to each measurement resource in the first subset, such as L1-RSRP, etc.

The contents to be reported in the reporting format 2 are illustrated in Table 3, where the quantity of measurement resources in the first subset with index n is represented by Xₙ.

**Table 3 Reporting format 2 of measurement results**

| CSI report number | CSI fields |
|---|---|
| CSI report #n | PCI #1 or Set B₁ index, if reported |
| | PCI #1 or Set B₂ index, if reported |
| | ... |
| | PCI #N or Set B_{N} index, if reported |
| | RSRP #1 corresponding to PCI #1 or Set B₁ index |
| | Differential RSRP #2 corresponding to PCI #1 or Set B₁ index |
| | ... |
| | Differential RSRP #X₁ corresponding to PCI #1 or Set B₁ index |
| | ... |
| | RSRP #1 corresponding to PCI #N or Set B_{N} index |
| | Differential RSRP #2 corresponding to PCI #N or Set B_{N} index |
| | ... |
| | Differential RSRP #X_{N} corresponding to PCI #N or Set B_{N} index |

The reporting format 3 includes that the UE reports only a measurement result of one first subset in each beam reporting. When the reporting format is adopted, the NW may collect the measurement results reported by the UE multiple times as the input of the model. In a possible implementation, in order to achieve flexibility in the use of the NW-side model, the NW-side may not need to wait to predict until measurement results of all of the first subsets are collected, or in other words, the NW may predict the optimal beam (pair) when measurement results of part of the first subsets are collected.

The contents to be reported in the reporting format 3 are illustrated in Table 4.

**Table 4 Reporting format 3 of measurement results**

| CSI report number | **CSI** fields |
|---|---|
| CSI report #n | PCI #n or Set Bₙ index |
| | RSRP #1 corresponding to PCI #n or Set Bₙ index |
| | Differential RSRP #2 corresponding to PCI #n or Set Bₙ index |
| | ... |
| | Differential RSRP #Xₙ corresponding to PCI #n or Set Bₙ index |

At operation S 1206, the NW determines a target downlink reference signal from Set A based on the measurement results.

A beam (pair) corresponding to the target downlink reference signal is an optimal beam (pair), and the optimal beam (pair) may be used for downlink transmission between at least one of the plurality of cells and the UE.

Exemplarily, a neural network model may be employed to predict the target downlink reference signal in Set A. In the embodiments of the present disclosure, the neural network model (abbreviated as a model) may be deployed on the NW side, and the NW may use the measurement results of measuring the downlink reference signals in Set B as an input of the model, and predict a link quality prediction result corresponding to the target downlink reference signal in Set A through the model.

The link quality prediction result in the embodiments of the present disclosure may include, for example, at least one of L1-RSRP, L1-SINR, L1-RSSI or L1-RSRQ.

For the input and output of the neural network model, reference may be made to S905 in the foregoing embodiment, and it will not be repeatedly described here.

At operation S1207, the NW sends downlink beam indication to the UE. Accordingly, the UE receives the downlink beam indication.

By determining the target downlink reference signal, NW may determine a beam (pair) (i.e., an optimal downlink beam (pair)) corresponding to the target downlink reference signal. Further, the NW may send the downlink beam indication to the UE to indicate the optimal downlink beam (pair).

In a possible implementation, the NW may perform downlink beam indication to the UE using a legacy TCI State or a unified TCI State. Reference signals from the serving cell and/or the non-serving cell of the UE may be included in the TCI State. The downlink beam indication may be used to indicate a QCL relationship between reference signals. The QCL relationship includes a QCL relationship between a downlink reference signal (such as a CSI-RS or SSB reported by the UE) on a specific BWP under a specific CC and a PDSCH DMRS, a PDCCH DMRS, as well as a CSI-RS.

By receiving the downlink beam indication, the UE may determine a receiving beam, and may receive downlink data from at least one of the plurality of cells through the receiving beam.

FIG. 13 is a schematic flowchart of a possible implementation process of a method for determining a spatial filter provided by an embodiment of the present disclosure.

In FIG. 13, beams (pairs) indicated by solid lines are beams (pairs) corresponding to uplink reference signals in the first uplink reference signal set (i.e., Set D), which are also beams (pairs) that the NW needs to actually measure. Beams (pairs) indicated by dashed lines are beams (pairs) corresponding to the uplink reference signals that the NW has not measured but belong to the second uplink reference signal set (i.e., Set C). It is to be understood that a union of beams (pairs) represented by the dashed lines and the solid lines are beams (pairs) corresponding to uplink reference signals in Set C.

Set D includes uplink reference signals between a plurality of cells and UE, and Set D may also be referred to as a measurement set, a measurement set of uplink reference signals, or a measurement set of uplink beams (pairs). Set C may also be referred to as a prediction set, or a prediction set of uplink reference signals, or a prediction set of uplink beams (pairs).

As illustrated in FIG. 13, the implementation process may include the following operations.

At operation S1301, the UE sends capability information to the NW.

Before the NW configures measurement resources (i.e., Set D) required by the model for the UE, the UE needs to inform the NW through capability reporting whether the UE supports sending measurement resources (i.e., Set D) of uplink beams (pairs) of a plurality of cells at UE-side in a spatial domain. That is, the capability information of the UE include: whether the UE supports sending the uplink reference signals in Set D.

For example, Set D may include K third subsets, where each third subset may correspond to one cell and each cell may correspond to one PCI. As an example, a k-th (1≤k≤K) third subset in Set D may be denoted as Set Dₖ.

In a case where the UE supports sending the uplink reference signals in Set D, the capability information reported by the UE includes, but is not limited to, at least one of the following:
1) a maximum number of third subsets supported by the UE on all uplink CCs/BWPs, for example, a maximum number of third subsets configurable by the UE, and for another example, a maximum number of third subsets that the UE is capable of sending simultaneously;
2) a maximum number of third subsets supported by the UE on one uplink CC/BWP; or
3) a maximum number of uplink reference signals that the UE is capable of sending in each third subset, for example, a maximum number of SRS resources that the UE is capable of sending in a k-th third subset Set Dₖ.

At operation S 1302, the NW sends third configuration information to the UE. Accordingly, the UE receives the third configuration information.

The third configuration information may include position information of the uplink reference signals in Set D, or the third configuration information may include information of reference signal resources associated with the uplink reference signals in Set D, or the third configuration information may include Set D. The uplink reference signals may include, for example, an SRS.

In operation S1302, the NW may configure and/or activate the measurement set Set D for the UE.

As an example, the NW may configure one or more Sets D for the UE using RRC signaling. Set D, as the measurement set of uplink beams (pairs), may include uplink reference signals (or uplink reference signal resources), such as SRS resources. Each Set D may include a set of third subsets (e.g., K third subsets), and the number of third subsets in each Set D may be different, that is, a value of K may be different for each Set D. The specific value of K is not limited in the embodiments of the present disclosure.

If the NW configures a plurality of Sets D for the UE, the NW may activate one Set D in the plurality of configured Sets D using MAC CE signaling according to an actual deployment situation and an antenna configuration situation. Alternatively, the UE may use one configured Set D.

After completing the configuration of the Set D, the NW may send the third configuration information about the Set D to the UE.

At operation S1303, the UE send the uplink reference signals in Set D to the NW.

After configuring and/or activating Set D by the NW for the UE, the UE may send the uplink reference signals in Set D to the NW. For example, the UE may send an SRS to the NW for uplink beam sweeping.

The NW may include, for example, base stations (or receivers) of a plurality of cells, so the operation that the UE sends the uplink reference signals in Set D to the NW may also be understood as being that the UE sends the uplink reference signals in Set D to the base stations of the plurality of cells (including a current serving cell and non-serving cells of the UE). Exemplarily, each cell may correspond to a third subset, each third subset being a subset of a universal set (i.e., Set D) of uplink transmitting beams for the cell.

Taking FIG. 13 as an example, each group (or cluster) of beams may correspond to one cell/third subset/fourth subset. On the NW side, solid lines indicate transmitting beams used by a base station of each cell when sending the uplink reference signals in Set D to the UE, and dashed lines indicate beams that are not used but belong to beams corresponding to the uplink reference signals in Set C. On the UE side, solid lines indicate receiving beams used by UE when receiving the uplink reference signals from the base station of each cell, and dashed lines indicate beams that are not used but belong to beams corresponding to the uplink reference signals in Set C.

At operation S1304, the NW measures the uplink reference signals in Set D.

In operation S1304, the base stations of the plurality of cells on the NW side may measure the uplink reference signals from the UE to obtain measurement results, and the measurement results may be used as an input of a neural network model (abbreviated as a model).

Taking FIG. 13 as an example, beams (pairs) indicated by solid lines are beams (pairs) corresponding to the uplink reference signals in Set D, which are also beams (pairs) that the NW needs to measure actually. Beams (pairs) indicated by dashed lines are beams (pairs) corresponding to the uplink reference signals that the NW has not measured but belong to Set C.

**In** the embodiments of the present disclosure, the measurement results may be, for example, a link quality corresponding to an uplink reference signal, such as SRS-RSRP.

**It** is to be noted that since the base stations (or receivers) of the plurality of cells may be dispersed in different physical spaces, the measurement results of the plurality of base stations on the NW side may be aggregated together as the input of the model. In an example, the measurement results of the plurality of base stations may be aggregated into a base station of a cell where the model is deployed. As another example, the NW also includes other network node(s) that may communicate with the base stations of the plurality of cells, and the model may be deployed on the network node, so the NW may also have the measurement results of the plurality of base stations aggregated into the network node.

At operation S1305, the NW determines a target uplink reference signal from Set C based on the measurement results.

For example, Set D may include J fourth subsets, where each fourth subset may correspond to one cell. As an example, a j-th (1≤j≤J) fourth subset in Set C may be denoted as Set Cⱼ.

A beam (pair) corresponding to the target uplink reference signal is an optimal beam (pair) used for uplink transmission, and the optimal beam (pair) may be used for uplink transmission between at least one of the plurality of cells and the UE.

Exemplarily, a neural network model (such as an AI/ML model) may be used to predict the target uplink reference signal in Set C. In the embodiments of the present disclosure, the neural network model (abbreviated as a model) may be deployed on the NW side, and the NW may use the measurement results of measuring the uplink reference signals in Set D as an input of the model, and predict a link quality prediction result corresponding to the target uplink reference signal in Set C through the model.

The link quality prediction result in the embodiments of the present disclosure may be SRS-RSRP.

As an example, the input of the model may include, for example, the following input manner 1 and input manner 2.

In the input manner 1, measurement results corresponding to all uplink reference signals in all or part of the third subsets are input in a fixed order. That is, measurement results of measuring all uplink reference signals in all or part of Sets Dₖ are input in a fixed order.

In the input manner 2, indices of all or part of the third subsets, as well as the measurement result corresponding to each uplink reference signal in all or part of the third subsets, are input. That is, indices k of all or part of Sets Dₖ, as well as measurement results corresponding to the uplink reference signals in all or part of Sets Dₖ, are input. The advantage of this manner is that a combination of different Sets Dₖ can be flexibly selected as the input of the model.

As an example, the output of the model may include, for example, at least one of output manner 1 to output manner 3.

In the output manner 1, an index of the target uplink reference signal is output. The index of the target uplink reference signal may also be understood as an index of a reference signal resource associated with the target uplink reference signal.

In the output manner 2, an index of a beam (pair) corresponding to the target uplink reference signal is output.

In the output manner 3, a link quality prediction result corresponding to the target uplink reference signal is output.

For example, the target uplink reference signal may be an uplink reference signal meeting a condition selected from Set C using the model, and the condition may include, for example, a link quality prediction result is optimal, and/or, the link quality prediction result is greater than a threshold. It is to be understood that the number of optimal link quality prediction results is not limited in the embodiments of the present disclosure. For example, the optimal link quality prediction result may refer to L optimal link quality prediction result(s), where L≥1, and uplink reference signal(s) corresponding to the L optimal link quality prediction result(s) is/are L selected target uplink reference signal(s).

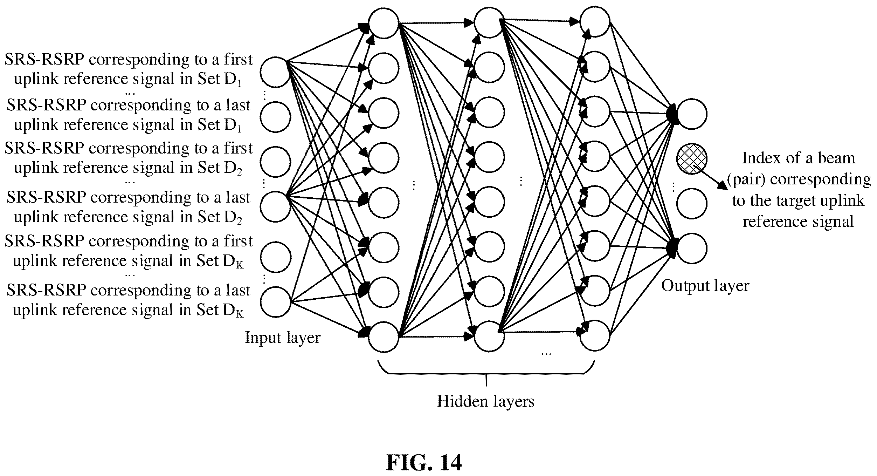

FIG. 14 is a schematic diagram of an example of an input and an output of a neural network model according to an embodiment of the present disclosure. The NW may use measurement results corresponding to all uplink reference signals in all or part of the Sets Dₖ in a fixed order as the input of the model (i.e., the input manner 1 is adopted), and may determine the target uplink reference signal(s) from all Sets Cⱼ, and then use, as the output of the model, an index of a beam (pair) corresponding to the target uplink reference signal, or indices of L optimal uplink beam(s) (pair(s)) predicted by the model (i.e., output manner 2 is adopted). In the example of FIG. 14, L=1.

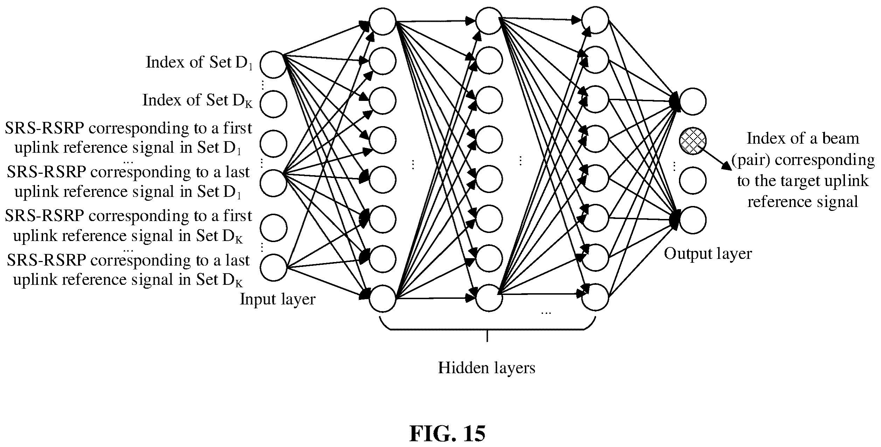

FIG. 15 is a schematic diagram of another example of an input and an output of a neural network model according to an embodiment of the present disclosure. The NW may use indices k of all or part of the Sets Dₖ, as well as a measurement result corresponding to each uplink reference signal in all or part of the Sets Dₖ as the input of the model (i.e., the input manner 2 is adopted). That is, in addition to the measurement result corresponding to each uplink reference signal in all or part of the Sets Dₖ, the indices of all or part of the Sets Dₖ may be used as additional input information for the model. As such, the UE may perform measurement flexibly (such as measuring only part of Sets Dₖ) and select measurement results to be input, without having to input measurement results of all of the Sets Dₖ into the model each time. In the example of FIG. 15, L=1, and a prediction result of the model is output using the output manner 2.

At operation S1306, the NW sends uplink beam indication to the UE. Accordingly, the UE receives the uplink beam indication.

By determining the target uplink reference signal, NW may determine a beam (pair) (i.e., an optimal uplink beam (pair)) corresponding to the target uplink reference signal. Further, the NW may send the uplink beam indication to the UE to indicate the optimal uplink beam (pair).

In a possible implementation, the NW may perform uplink beam indication to the UE using a legacy Spatial Relation Information (SRI) or a unified TCI State. Reference signals from the serving cell and/or the non-serving cell of the UE may be included in the uplink beam indication. The uplink beam indication may be used to indicate a spatial relationship between reference signals. The spatial relationship includes spatial relationship information between an uplink reference signal (such as CSI-RS or SSB reported by the UE) or an uplink reference signal (such as SRS for beam scanning by the UE) on a specific BWP under a specific CC and a Physical Uplink Shared Channel (PUSCH) DMRS, a Physical Uplink Control Channel (PUCCH) DMRS, as well as other SRS.

By receiving the uplink beam indication, the UE may determine a transmitting beam, and may send uplink data to at least one of the plurality of cells through the transmitting beam.

The above technical solutions design a prediction technology of a beam (pair) of a plurality of cells in the spatial domain based on the AI/ML model. For prediction of the downlink beam (pair), when the model is deployed on the UE side, the UE may measure a measurement set of the plurality of spatial beams (pairs) of the plurality of cells as an input of the model. Subsequently, the model predicts the optimal downlink beam (pair) from the universal set (including the beams (pairs) of the plurality of cells) of beams (pairs). When the model is deployed on the NW side, the UE may feedback the measurement results of measuring Set B to the NW, so that the model on the NW side may infer the optimal downlink beam (pair) from Set A. For prediction of uplink beams (pairs), the model may be deployed on the NW side. The UE may send uplink reference signals (such as SRS resources for beam scanning) to a plurality of cells, so that the NW may measure the received uplink reference signals and use the measurement results as input to the model, and then output the predicted the optimal uplink beam (pair) within the plurality of cells.

Preferred embodiments of the present disclosure have been described in detail with reference to the accompanying drawings, but the present disclosure is not limited to the specific details of the above embodiments. Within the scope of the technical concept of the present disclosure, various simple modifications can be made to the technical solutions of the present disclosure, and these simple modifications all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, various embodiments of the present disclosure may be combined with each other arbitrarily so long as they do violate the idea of the present disclosure, and they should likewise be regarded as the disclosed content of the present disclosure. For another example, on the premise of no conflict, various embodiments described in the present disclosure and/or the technical features in each embodiment can be arbitrarily combined with the related art, and the technical solutions obtained after combination should also fall within the scope of protection of the present disclosure.

It is to be understood that in various method embodiments of the present disclosure, the size of the sequence numbers of the above-mentioned processes does not mean the order of execution, and the execution order of each process should be determined by its function and inherent logic, and should not be limited in any way to the implementation process of the embodiments of the present disclosure. Further, in embodiments of the present disclosure, the terms "downlink", "uplink" and "sidelink" are used to denote the transmission direction of the signal or data, where "downlink" is used to denote the transmission direction of the signal or data as a first direction transmitted from the site to the user equipment of the cell, and "uplink" is used to denote the transmission direction of the signal or data as a second direction transmitted from the user equipment of the cell to the site, "sidelink" is used to denote the transmission direction of the signal or data as a first direction transmitted from user equipment 1 to user equipment 2. For example, "downlink signal" denotes that the transmission direction of the signal is the first direction. In the present disclosure, the term "and/or" is used to describe an association relationship of associated objects, and represents that there may be three relationships. Specifically, A and/or B may represent the following three situations: i.e., independent existence of A, existence of both A and B and independent existence of B. In addition, the character "/" in the present disclosure generally represents that an "or" relationship is formed between the previous and next associated objects.

Based on the foregoing embodiments, there is provided a corresponding apparatus for determining a spatial filter in the embodiments of the present disclosure.

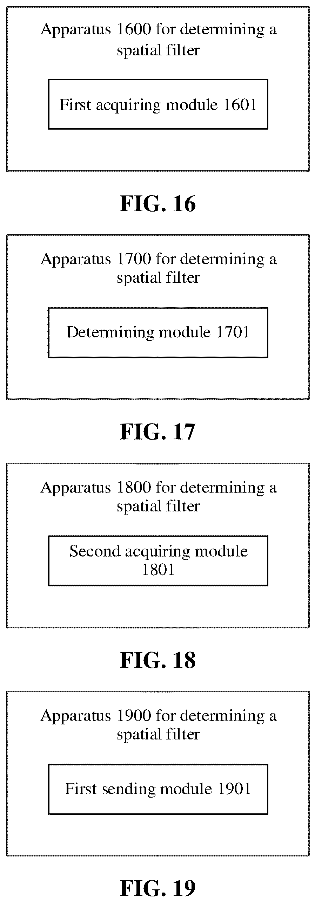

FIG. 16 is a first structural composition diagram of an apparatus for determining a spatial filter provided by the embodiments of the present disclosure, and the apparatus for determining a spatial filter is applied to a terminal. As illustrated in FIG. 16, the apparatus for determining a spatial filter includes a first acquiring module 1601.

The first acquiring module 1601 is configured to acquire measurement results of measuring downlink reference signals in a first downlink reference signal set. The first downlink reference signal set includes downlink reference signals between a plurality of cells and the apparatus 1600, the measurement results are used to determine one or more target downlink reference signals from a second downlink reference signal set, and one or more spatial filters corresponding to the one or more target downlink reference signals are used for downlink transmission between at least one of the plurality of cells and the apparatus 1600.

In some embodiments, the apparatus 1600 further includes a determining module. The determining module is configured to determine the one or more target downlink reference signals from the second downlink reference signal set based on the measurement results.

In some embodiments, the determining module includes: a first determining sub-module and a second determining sub-module. The first determining sub-module is configured to determine a link quality prediction result corresponding to each downlink reference signal in the second downlink reference signal set based on the measurement results. The second determining sub-module is configured to determine the target downlink reference signal(s) based on the link quality prediction result corresponding to each downlink reference signal in the second downlink reference signal set.

In some embodiments, the first determining sub-module is specifically configured to determine, using a neural network model, the link quality prediction result corresponding to each downlink reference signal in the second downlink reference signal set based on the measurement results.

In some embodiments, the first downlink reference signal set includes at least one first subset. An input of the neural network model includes: a measurement result corresponding to each downlink reference signal in all or part of first subsets; or indices of all or part of the first subsets, and the measurement result corresponding to each downlink reference signal in all or part of the first subsets. An output of the neural network model includes at least one of: an index of the target downlink reference signal, an index of the spatial filter corresponding to the target downlink reference signal, or a link quality prediction result corresponding to the target downlink reference signal.

In some embodiments, the target downlink reference signal is a downlink reference signal meeting a condition in the second downlink reference signal set, and the condition includes: a link quality prediction result is optimal; and/or, the link quality prediction result is greater than a threshold.

In some embodiments, the apparatus 1600 further includes a first sending module. The first sending module is configured to send first indication information to a network device, where the first indication information is used to indicate the target downlink reference signal.

In some embodiments, the second downlink reference signal set includes at least one second subset, and each second subset corresponds to a Physical Cell Identifier (PCI). The first indication information includes at least one of: an index of a second subset in which the target downlink reference signal is located; an index of a PCI corresponding to the second subset in which the target downlink reference signal is located; an index of the target downlink reference signal; an index of the spatial filter corresponding to the target downlink reference signal; or a link quality prediction result corresponding to the target downlink reference signal.

In some embodiments, a plurality of target downlink reference signals are determined, and the plurality of target downlink reference signals are sent through same first indication information.

In some embodiments, the measurement results and/or the link quality prediction results include at least one of: a Reference Signal Receiving Power (RSRP), a Signal to Interference plus Noise Ratio (SINR), a Received Signal Strength Indicator (RSSI), or a Reference Signal Receiving Quality (RSRQ).

In some embodiments, the apparatus 1600 further includes a second sending module. The second sending module is configured to send the measurement result to a network device.

In some embodiments, the first downlink reference signal set includes at least one first subset, and each first subset corresponds to a PCI. The measurement results include: measurement results of measuring downlink reference signals in all or part of first subsets. The measurement results of measuring downlink reference signals in all of the first subsets include: a measurement result corresponding to each downlink reference signal in all of the first subsets. The measurement results of measuring downlink reference signals in part of the first subsets include: indices of the part of the first subsets or indices of PCIs corresponding to the part of the first subsets, and a measurement result corresponding to each downlink reference signal in the part of the first subsets.

In some embodiments, the apparatus 1600 further includes: a third sending module. The third sending module is configured to send capability information of the apparatus 1600 to a network device. The capability information includes: whether the apparatus 1600 supports measuring the downlink reference signals in the first downlink reference signal set; and/or whether the apparatus 1600 supports determining the one or more target downlink reference signals from the second downlink reference signal set.

In some embodiments, the first downlink reference signal set includes at least one first subset, and the second downlink reference signal set includes at least one second subset. Each first subset corresponds to one of the plurality of cells, and each second subset corresponds to one of the plurality of cells. The capability information further includes at least one of: a maximum number of first subsets and/or second subsets supported by the apparatus 1600 on all downlink Carrier Components (CCs) or downlink Bandwidth Parts (BWPs); a maximum number of first subsets and/or second subsets supported by the apparatus 1600 on one downlink CC or downlink BWP; a maximum number of downlink reference signals measureable by the apparatus 1600 in each first subset; or a maximum number of target downlink reference signals determinable by the apparatus 1600 in each second subset.

In some embodiments, the maximum number of the first subsets supported by the apparatus 1600 on all downlink CCs or downlink BWPs includes: a maximum number of first subsets configurable by the apparatus 1600 on all downlink CCs or downlink BWPs; and/or, a maximum number of first subsets simultaneously measureable by the apparatus 1600 on all downlink CCs or downlink BWPs. The maximum number of the second subsets supported by the apparatus 1600 on all downlink CCs or downlink BWPs includes: a maximum number of second subsets configurable by the apparatus 1600 on all downlink CCs or downlink BWPs.

In some embodiments, the apparatus 1600 further includes: a first receiving module. The first receiving module is configured to receive first configuration information and/or second configuration information from the network device, where the first configuration information and/or the second configuration information is related to the capability information of the apparatus 1600. The first configuration information includes: position information of the downlink reference signals in the first downlink reference signal set; and the second configuration information includes: position information of downlink reference signals in the second downlink reference signal set.

In some embodiments, the first downlink reference signal set is a subset of the second downlink reference signal set.

In some embodiments, the downlink reference signals include: a Channel State Information-Reference Signal (CSI-RS) and/or a Synchronization Signal Block (SSB).

In some embodiments, the apparatus 1600 further includes a second receiving module. The second receiving module is configured to receive second indication information from a network device, where the second indication information is used to indicate the spatial filter, and the spatial filter corresponds to the target downlink reference signal.

FIG. 17 is a second structural composition diagram of an apparatus for determining a spatial filter provided by the embodiments of the present disclosure, and the apparatus for determining a spatial filter is applied to a network device. As illustrated in FIG. 17, the apparatus for determining a spatial filter includes a determining module 1701.

The determining module 1701 is configured to determine one or more target downlink reference signals. One or more spatial filters corresponding to the one or more target downlink reference signals are used for downlink transmission between at least one of a plurality of cells and a terminal. The one or more target downlink reference signals are determined from a second downlink reference signal set based on measurement results, where the measurement results are obtained by measuring downlink reference signals in a first downlink reference signal set.

In some embodiments, the apparatus 1700 further includes a first receiving module. The first receiving module is configured to receive first indication information from a terminal, where the first indication information is used to indicate the target downlink reference signal.

In some embodiments, the second downlink reference signal set includes at least one second subset, and each second subset corresponds to a Physical Cell Identifier (PCI). The first indication information includes at least one of: an index of a second subset in which the target downlink reference signal is located; an index of a PCI corresponding to the second subset in which the target downlink reference signal is located; an index of the target downlink reference signal; an index of the spatial filter corresponding to the target downlink reference signal; or a link quality prediction result corresponding to the target downlink reference signal.

In some embodiments, the determining module 1701 includes a receiving sub-module and a determining sub-module. The receiving sub-module is configured to receive the measurement results. The determining sub-module is configured to determine the one or more target downlink reference signals from the second downlink reference signal set based on the measurement results.

In some embodiments, the determining sub-module includes: a first determining unit and a second determining unit. The first determining unit is configured to determine a link quality prediction result corresponding to each downlink reference signal in the second downlink reference signal set based on the measurement results. The second determining unit is configured to determine the target downlink reference signal(s) based on the link quality prediction result corresponding to each downlink reference signal in the second downlink reference signal set.

In some embodiments, the target downlink reference signal is a downlink reference signal meeting a condition in the second downlink reference signal set, and the condition includes: a link quality prediction result is optimal; and/or, the link quality prediction result is greater than a threshold.

In some embodiments, the measurement results and/or the link quality prediction results include at least one of: a Reference Signal Receiving Power (RSRP), a Signal to Interference plus Noise Ratio (SINR), a Received Signal Strength Indicator (RSSI), or a Reference Signal Receiving Quality (RSRQ).

In some embodiments, the first downlink reference signal set includes at least one first subset, and each first subset corresponds to a PCI. The measurement results include: measurement results of measuring downlink reference signals in all or part of first subsets. The measurement results of measuring downlink reference signals in all of the first subsets include: a measurement result corresponding to each downlink reference signal in all of the first subsets. The measurement results of measuring downlink reference signals in part of the first subsets include: indices of the part of the first subsets or indices of PCIs corresponding to the part of the first subsets, and a measurement result corresponding to each downlink reference signal in the part of the first subsets.

In some embodiments, the first determining unit is specifically configured to determine, using a neural network model, the link quality prediction result corresponding to each downlink reference signal in the second downlink reference signal set based on the measurement results.

In some embodiments, the first downlink reference signal set includes at least one first subset. An input of the neural network model includes: a measurement result corresponding to each downlink reference signal in all of first subsets; or indices of all or part of the first subsets, and the measurement result corresponding to each downlink reference signal in all or part of the first subsets. An output of the neural network model includes at least one of: an index of the target downlink reference signal, an index of the spatial filter corresponding to the target downlink reference signal, or a link quality prediction result corresponding to the target downlink reference signal.

In some embodiments, the apparatus 1700 further includes: a second receiving module. The second receiving module is configured to receive capability information of the terminal. The capability information includes: whether the terminal supports measuring the downlink reference signals in the first downlink reference signal set; and/or whether the terminal supports determining the one or more target downlink reference signals from the second downlink reference signal set.

In some embodiments, the first downlink reference signal set includes at least one first subset, and the second downlink reference signal set includes at least one second subset. Each first subset corresponds to one of the plurality of cells, and each second subset corresponds to one of the plurality of cells. The capability information further includes at least one of: a maximum number of first subsets and/or second subsets supported by the terminal on all downlink Carrier Components (CCs) or downlink Bandwidth Parts (BWPs); a maximum number of first subsets and/or second subsets supported by the terminal on one downlink CC or downlink BWP; a maximum number of downlink reference signals measureable by the terminal in each first subset; or a maximum number of target downlink reference signals determinable by the terminal in each second subset.

In some embodiments, the maximum number of the first subsets supported by the terminal on all downlink CCs or downlink BWPs includes: a maximum number of first subsets configurable by the terminal on all downlink CCs or downlink BWPs; and/or, a maximum number of first subsets simultaneously measureable by the terminal on all downlink CCs or downlink BWPs. The maximum number of the second subsets supported by the terminal on all downlink CCs or downlink BWPs includes: a maximum number of second subsets configurable by the terminal on all downlink CCs or downlink BWPs.

In some embodiments, the apparatus 1700 further includes: a first sending module. The first sending module is configured to send first configuration information and/or second configuration information to the terminal, where the first configuration information and/or the second configuration information is related to the capability information of the terminal. The first configuration information includes: position information of the downlink reference signals in the first downlink reference signal set; and the second configuration information includes: position information of downlink reference signals in the second downlink reference signal set.

In some embodiments, the apparatus 1700 further includes a second sending module. The second sending module is configured to send second indication information to the terminal, where the second indication information is used to indicate the spatial filter, and the spatial filter corresponds to the target downlink reference signal.

FIG. 18 is a third structural composition diagram of an apparatus for determining a spatial filter provided by the embodiments of the present disclosure, and the apparatus for determining a spatial filter is applied to a network device. As illustrated in FIG. 18, the apparatus for determining a spatial filter includes a second acquiring module 1801.

The second acquiring module 1801 is configured to acquire measurement results of measuring uplink reference signals in a first uplink reference signal set. The first uplink reference signal set includes uplink reference signals between a plurality of cells and the terminal, the measurement results are used to determine one or more target uplink reference signals from a second uplink reference signal set, and one or more spatial filters corresponding to the one or more target uplink reference signals are used for uplink transmission between at least one of the plurality of cells and the terminal.

In some embodiments, the apparatus 1800 further includes a determining module. The determining module is configured to determine one or more target uplink reference signals from the second uplink reference signal set based on the measurement results.

In some embodiments, the determining module includes: a first determining sub-module and a second determining sub-module. The first determining sub-module is configured to determine a link quality prediction result corresponding to each uplink reference signal in the second uplink reference signal set based on the measurement results. The second determining sub-module is configured to determine the target uplink reference signal(s) based on the link quality prediction result corresponding to each uplink reference signal in the second uplink reference signal set.

In some embodiments, the first determining sub-module is specifically configured to determine, using a neural network model, the link quality prediction result corresponding to each uplink reference signal in the second uplink reference signal set based on the measurement results.

In some embodiments, the first uplink reference signal set includes at least one third subset. An input of the neural network model includes: a measurement result corresponding to each uplink reference signal in all or part of third subsets; or indices of all or part of the third subsets, and the measurement result corresponding to each uplink reference signal in all or part of the third subsets. An output of the neural network model includes at least one of: an index of the target uplink reference signal, an index of the spatial filter corresponding to the target uplink reference signal, or a link quality prediction result corresponding to the target uplink reference signal.

In some embodiments, the target uplink reference signal is an uplink reference signal meeting a condition in the second uplink reference signal set, and the condition includes: a link quality prediction result is optimal; and/or, the link quality prediction result is greater than a threshold.

In some embodiments, the measurement results and/or the link quality prediction results include at least one of: a Reference Signal Receiving Power (RSRP), a Signal to Interference plus Noise Ratio (SINR), a Received Signal Strength Indicator (RSSI), or a Reference Signal Receiving Quality (RSRQ).

In some embodiments, the apparatus 1800 further includes: a receiving module. The receiving module is configured to receive capability information of the terminal. The capability information includes: whether the terminal supports sending the uplink reference signals in the first uplink reference signal set.

In some embodiments, the first uplink reference signal set includes at least one third subset, and each third subset corresponds to one of the plurality of cells. In a case where the terminal supports sending the uplink reference signals in the first uplink reference signal set, the capability information further includes at least one of: a maximum number of third subsets supported by the terminal on all uplink Carrier Components (CCs) or uplink Bandwidth Parts (BWPs); a maximum number of third subsets supported by the terminal on one uplink CC or uplink BWP; or a maximum number of uplink reference signals that the terminal is capable of sending in each third subset.

In some embodiments, the maximum number of the third subsets supported by the terminal on all uplink CCs or uplink BWPs includes: a maximum number of the third subsets configurable by the terminal on all uplink CCs or uplink BWPs; and/or, a maximum number of third subsets that the terminal is capable of sending simultaneously on all uplink CCs or uplink BWPs.

In some embodiments, the apparatus 1800 further includes: a first sending module. The first sending module is configured to send third configuration information to the terminal, where the third configuration information is related to the capability information of the terminal. The third configuration information includes: position information of the uplink reference signals in the first uplink reference signal set.

In some embodiments, the uplink reference signals include: a Sounding Reference Signal (SRS).

In some embodiments, the apparatus 1800 further includes a second sending module. The second sending module is configured to send third indication information to the terminal, where the third indication information is used to indicate the spatial filter, and the spatial filter corresponds to the target uplink reference signal.

FIG. 19 is a fourth structural composition diagram of an apparatus for determining a spatial filter provided by the embodiments of the present disclosure, and the apparatus for determining a spatial filter is applied to a terminal. As illustrated in FIG. 19, the apparatus for determining a spatial filter includes a first sending module 1901.

The first sending module 1901 is configured to send uplink reference signals in a first uplink reference signal set. The first uplink reference signal set includes uplink reference signals between a plurality of cells and the apparatus 1900, the uplink reference signals in the first uplink reference signal set are used to determine one or more target uplink reference signals from a second uplink reference signal set, and one or more spatial filters corresponding to the one or more target uplink reference signals are used for uplink transmission between at least one of the plurality of cells and the apparatus 1900.

In some embodiments, the apparatus 1900 further includes: a second sending module. The second sending is configured to capability information of the apparatus 1900 to a network device, where the capability information includes: whether the apparatus 1900 supports sending the uplink reference signals in the first uplink reference signal set.

In some embodiments, the first uplink reference signal set includes at least one third subset, and each third subset corresponds to one of the plurality of cells. In a case where the apparatus 1900 supports sending the uplink reference signals in the first uplink reference signal set, the capability information further includes at least one of: a maximum number of third subsets supported by the apparatus 1900 on all uplink Carrier Components (CCs) or uplink Bandwidth Parts (BWPs); a maximum number of third subsets supported by the apparatus 1900 on one uplink CC or uplink BWP; or a maximum number of uplink reference signals that the apparatus 1900 is capable of sending in each third subset.

In some embodiments, the maximum number of the third subsets supported by the apparatus 1900 on all uplink CCs or uplink BWPs includes: a maximum number of the third subsets configurable by the apparatus 1900 on all uplink CCs or uplink BWPs; and/or, a maximum number of third subsets that the apparatus 1900 is capable of sending simultaneously on all uplink CCs or uplink BWPs.

In some embodiments, the apparatus 1900 further includes: a first receiving module. The first receiving module is configured to receive third configuration information from the network device, where the third configuration information is related to the capability information of the apparatus 1900. The third configuration information includes: position information of the uplink reference signals in the first uplink reference signal set.

In some embodiments, the uplink reference signals include: a Sounding Reference Signal (SRS).

In some embodiments, the apparatus 1900 further includes a second receiving module. The second receiving module is configured to receive third indication information from a network device, where the third indication information is used to indicate the spatial filter, and the spatial filter corresponds to the target uplink reference signal.

It will be understood by those skilled in the art that the above description of the apparatus for determining a spatial filter of the embodiments of the present disclosure may be understood with reference to the description of the method for determining a spatial filter of the embodiments of the present disclosure.

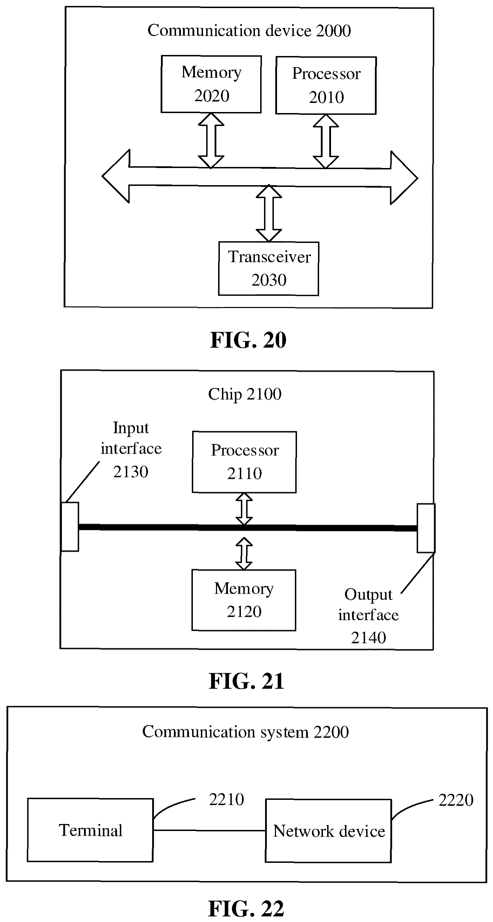

FIG. 20 is a schematic structural diagram of a communication device 2000 provided by an embodiment of the present disclosure. The communication device may be a terminal device or a network device. The communication device 2000 illustrated in FIG. 20 includes a processor 2010 that may call and execute a computer program from a memory to implement the method in the embodiments of the present disclosure.

Optionally, as illustrated in FIG. 20, the communication device 2000 may also include a memory 2020. The processor 2010 may call and execute a computer program from the memory 2020 to implement the method in the embodiments of the present disclosure.

The memory 2020 may be a separate device independent of the processor 2010 or may be integrated in the processor 2010.

Optionally, as illustrated in FIG. 20, the communication device 2000 may also include a transceiver 2030. The processor 2010 may control the transceiver 2030 to communicate with other devices, and in particular send information or data to other devices, or receive information or data sent by other devices.

The transceiver 2030 may include a transmitter and a receiver. The transceiver 2030 may further include antennas. The number of antennas may be one or more.

Optionally, the communication device 2000 may be specifically a network device of the embodiments of the present disclosure, and the communication device 2000 may implement corresponding processes implemented by the network device in the respective methods of the embodiments of the present disclosure, which will not be repeated here for the sake of brevity.

Optionally, the communication device 2000 may be specifically a terminal (such as a mobile terminal/terminal device) of the embodiments of the present disclosure, and the communication device 2000 may implement corresponding processes implemented by the terminal in various methods of the embodiments of the present disclosure, which will not be repeated here for the sake of brevity.

FIG. 21 is a schematic structural diagram of a chip according to an embodiment of the present disclosure. As illustrated in FIG. 21, the chip 2100 includes a processor 2110, which may call and execute a computer program from a memory to implement the method in the embodiments of the present disclosure.

Optionally, as illustrated in FIG. 21, the chip 2100 may also include a memory 2120. The processor 2110 may call and execute a computer program from the memory 2120 to implement the method in the embodiments of the present disclosure.

The memory 2120 may be a separate device independent of the processor 2110 or may be integrated in the processor 2110.

Optionally, the chip 2100 may also include an input interface 2130. The processor 2110 may control the input interface 2130 to communicate with other devices or chips, and in particular to obtain information or data sent by other devices or chips.

Optionally, the chip 2100 may also include an output interface 2140. The processor 2110 may control the output interface 2140 to communicate with other devices or chips, and in particular to output information or data to other devices or chips.

Optionally, the chip may be applied to be the network device of the embodiments of the present disclosure, and the chip may implement corresponding processes implemented by the network device in various methods of the embodiments of the present disclosure, which will not be repeated here for the sake of brevity.

Optionally, the chip may be applied to be the terminal (such as a mobile terminal/terminal device) of an embodiment of the present disclosure, and the chip may implement corresponding processes implemented by the terminal in the respective methods of the embodiments of the present disclosure, which will not be repeated here for the sake of brevity.

It is to be understood that the chip mentioned in the embodiments of the present disclosure may also be referred to as a system-level chip, a system chip, a chip system or a system-on-chip or the like.

There is also provided a computer storage medium in the embodiments of the present disclosure, where one or more programs are stored in the computer storage medium, and the one or more programs may be executed by the one or more processors to implement the method in the embodiments of the present disclosure.

FIG. 22 is a schematic block diagram of a communication system 2200 provided by an embodiment of the present disclosure. As illustrated in FIG. 22, the communication system 2200 includes a terminal 2210 and a network device 2220.

The terminal 2210 may be configured to implement corresponding functions implemented by the terminal in the above method, and the network device 2220 may be configured to implement corresponding functions implemented by the network device in the above method, which will not be repeated here for the sake of brevity.

It is to be understood that the processor of the present disclosure may be an integrated circuit chip having a signal processing capability. In implementation, the actions of the above method embodiments may be accomplished by integrated logic circuitry of hardware in processor or instructions in the form of software. The above processor may be a general purpose processor, a digital signal processor (DSP), an application specific integrated circuit (ASIC), a field programmable gate array (FPGA) or other programmable logic devices, discrete gates or transistor logic devices, or discrete hardware components. The processor may implement or execute the methods, actions and logic diagrams disclosed in the embodiments of the present disclosure. The general purpose processor may be a microprocessor or any conventional processor. The actions of the method disclosed in the embodiments of the present disclosure may be directly embodied as being executed by a hardware decoding processor or being executed by hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the actions of the aforementioned method in conjunction with its hardware.

It will be appreciated that the memory in the embodiments of the present disclosure may be a volatile memory or a non-volatile memory, or may also include both a volatile memory and a non-volatile memory. The non-volatile memory may be a Read-Only Memory (ROM), a Programmable ROM (PROM), an Erasable PROM (EPROM), an Electrically EPROM (EPROM) or a flash memory. The volatile memory may be a Random Access Memory (RAM), which serves as an external cache. By way of illustration but not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchronous Link DRAM (SLDRAM), a Direct Rambus RAM (DR RAM). It is to be noted that the memory in the systems and methods described herein is intended to include, but is not limited to, these memories and any other suitable types of memory.

It is to be understood that the memory described above is exemplary but not limiting. For example, the memory in the embodiments of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchronous Link DRAM (SLDRAM), a Direct Rambus RAM (DR RAM), etc. That is, the memory in the embodiments of the present disclosure is intended to include, but is not limited to, these memories and any other suitable types of memory.

In an embodiment of the present disclosure, there is further provided a computer-readable storage medium for storing a computer program.

Optionally, the computer-readable storage medium may be applied to the network device of the embodiments of the present disclosure, and the computer program causes a computer to implement corresponding processes implemented by the network device in the methods of the embodiments of the present disclosure, which will not be repeated here for the sake of brevity.

Optionally, the computer-readable storage medium may be applied to the terminal (such as a mobile terminal/terminal device) of the embodiments of the present disclosure, and the computer program causes a computer to implement corresponding processes implemented by the terminal in the methods of the embodiments of the present disclosure, which will not be repeated here for the sake of brevity.

In an embodiment of the present disclosure, there is further provided a computer program product, which includes computer program instructions.

Optionally, the computer program product may be applied to the network device of the embodiments of the present disclosure, and the computer program instructions cause a computer to implement corresponding processes implemented by the network device in the methods of the embodiments of the present disclosure, which will not be repeated here for the sake of brevity.

Optionally, the computer program product may be applied to the terminal (such as a mobile terminal/terminal device) of the embodiments of the present disclosure, and the computer program instructions cause a computer to implement corresponding processes implemented by the terminal in the methods of the embodiments of the present disclosure, which will not be repeated here for the sake of brevity.

In an embodiment of the present disclosure, there is further provided a computer program.

Optionally, the computer program may be applied to the network device of the embodiments of the present disclosure, and the computer program, when running on a computer, causes the computer to implement corresponding processes implemented by the network device in the methods of the embodiments of the present disclosure, which will not be repeated here for the sake of brevity.

Optionally, the computer program may be applied to the terminal (such as a mobile terminal/terminal device) of the embodiments of the present disclosure, and the computer program, when running on a computer, causes the computer to implement corresponding processes implemented by the terminal in the methods of the embodiments of the present disclosure, which will not be repeated here for the sake of brevity.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solutions. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided herein, it is to be understood that the disclosed systems, apparatuses and methods may be implemented in other manners. For example, the above-described embodiments of the apparatus is only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, various functional units in various embodiments of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure, in essence or the part contributing to the prior art, or part of the technical solutions can be embodied in the form of a software product. The computer software product is stored in a storage medium, and includes several instructions so that a computer device (which may be a personal computer, a server, a network device or the like) implements all or part of the method according to respective embodiments of the disclosure. The aforementioned storage medium includes various media capable of storing a program code such as a USB disk, a mobile hard drive disk, a read-only memory (ROM), a random access memory (RAM), a magnetic disk or an optical disk.

The foregoing descriptions are merely specific implementations of the present disclosure, but the scope of protection of the present disclosure is not limited thereto. Any person skilled in the art may easily think of changes or substitutions within the technical scope disclosed in the present disclosure, which should be covered within the protection scope of the present disclosure. Therefore, the scope of protection of the present disclosure shall be defined by the scope of protection of the claims.

## Claims

1. A method for determining a spatial filter, applied to a terminal, the method comprising:
acquiring measurement results of measuring downlink reference signals in a first downlink reference signal set, wherein the first downlink reference signal set comprises downlink reference signals between a plurality of cells and the terminal,
wherein the measurement results are used to determine one or more target downlink reference signals from a second downlink reference signal set, and one or more spatial filters corresponding to the one or more target downlink reference signals are used for downlink transmission between at least one of the plurality of cells and the terminal.

2. The method of claim 1, further comprising:
determining the one or more target downlink reference signals from the second downlink reference signal set based on the measurement results.

3. The method of claim 2, wherein determining the one or more target downlink reference signals from the second downlink reference signal set based on the measurement results comprises:
determining a link quality prediction result corresponding to each downlink reference signal in the second downlink reference signal set based on the measurement results; and
determining the target downlink reference signal based on the link quality prediction result corresponding to each downlink reference signal in the second downlink reference signal set.

4. The method of claim 3, wherein determining the link quality prediction result corresponding to each downlink reference signal in the second downlink reference signal set based on the measurement results comprises:
determining, using a neural network model, the link quality prediction result corresponding to each downlink reference signal in the second downlink reference signal set based on the measurement results.

5. The method of claim 4, wherein the first downlink reference signal set comprises at least one first subset,
wherein an input of the neural network model comprises:
a measurement result corresponding to each downlink reference signal in all or part of first subsets; or
indices of all or part of the first subsets, and the measurement result corresponding to each downlink reference signal in all or part of the first subsets; and
wherein an output of the neural network model comprises at least one of:
an index of the target downlink reference signal, an index of the spatial filter corresponding to the target downlink reference signal, or a link quality prediction result corresponding to the target downlink reference signal.

6. The method of any one of claims 3 to 5, wherein
the target downlink reference signal is a downlink reference signal meeting a condition in the second downlink reference signal set,
wherein the condition comprises: a link quality prediction result is optimal; and/or, the link quality prediction result is greater than a threshold.

7. The method of any one of claims 1 to 6, further comprising:
sending first indication information to a network device, wherein the first indication information is used to indicate the target downlink reference signal.

8. The method of claim 7, wherein the second downlink reference signal set comprises at least one second subset, and each second subset corresponds to a Physical Cell Identifier, PCI; and
wherein the first indication information comprises at least one of:
an index of a second subset in which the target downlink reference signal is located;
an index of a PCI corresponding to the second subset in which the target downlink reference signal is located;
an index of the target downlink reference signal;
an index of the spatial filter corresponding to the target downlink reference signal; or
a link quality prediction result corresponding to the target downlink reference signal.

9. The method of claim 7 or 8, wherein a plurality of target downlink reference signals are determined, and the plurality of target downlink reference signals are sent through same first indication information.

10. The method of any one of claims 4 to 6, wherein the measurement results and/or the link quality prediction results comprise at least one of:
a Reference Signal Receiving Power, RSRP, a Signal to Interference plus Noise Ratio, SINR, a Received Signal Strength Indicator, RSSI, or a Reference Signal Receiving Quality, RSRQ.

11. The method of claim 1, further comprising:
sending the measurement results to a network device.

12. The method of claim 11, wherein the first downlink reference signal set comprises at least one first subset, and each first subset corresponds to a PCI;
wherein the measurement results comprise: measurement results of measuring downlink reference signals in all or part of first subsets;
wherein the measurement results of measuring downlink reference signals in all of the first subsets comprise: a measurement result corresponding to each downlink reference signal in all of the first subsets; and
wherein the measurement results of measuring downlink reference signals in part of the first subsets comprise: indices of the part of the first subsets or indices of PCIs corresponding to the part of the first subsets, and a measurement result corresponding to each downlink reference signal in the part of the first subsets.

13. The method of any one of claims 1 to 12, further comprising:
sending capability information of the terminal to a network device, wherein the capability information comprises:
whether the terminal supports measuring the downlink reference signals in the first downlink reference signal set; and/or
whether the terminal supports determining the one or more target downlink reference signals from the second downlink reference signal set.

14. The method of claim 13, wherein the first downlink reference signal set comprises at least one first subset, and the second downlink reference signal set comprises at least one second subset; wherein each first subset corresponds to one of the plurality of cells, and each second subset corresponds to one of the plurality of cells; and
wherein the capability information further comprises at least one of:
a maximum number of first subsets and/or second subsets supported by the terminal on all downlink Carrier Components, CCs, or downlink Bandwidth Parts, BWPs;
a maximum number of first subsets and/or second subsets supported by the terminal on one downlink CC or downlink BWP;
a maximum number of downlink reference signals measureable by the terminal in each first subset; or
a maximum number of target downlink reference signals determinable by the terminal in each second subset.

15. The method of claim 14, wherein
the maximum number of the first subsets supported by the terminal on all downlink CCs or downlink BWPs comprises: a maximum number of first subsets configurable by the terminal on all downlink CCs or downlink BWPs; and/or, a maximum number of first subsets simultaneously measureable by the terminal on all downlink CCs or downlink BWPs; and
the maximum number of the second subsets supported by the terminal on all downlink CCs or downlink BWPs comprises: a maximum number of second subsets configurable by the terminal on all downlink CCs or downlink BWPs.

16. The method of any one of claims 13 to 15, further comprising:
receiving first configuration information and/or second configuration information from the network device, wherein the first configuration information and/or the second configuration information is related to the capability information of the terminal; and
wherein the first configuration information comprises: position information of the downlink reference signals in the first downlink reference signal set; and the second configuration information comprises: position information of downlink reference signals in the second downlink reference signal set.

17. The method of any one of claims 1 to 16, wherein the first downlink reference signal set is a subset of the second downlink reference signal set.

18. The method of any one of claims 1 to 17, wherein the downlink reference signals comprise: a Channel State Information-Reference Signal, CSI-RS, and/or a Synchronization Signal Block, SSB.

19. The method of any one of claims 1 to 18, further comprising:
receiving second indication information from a network device, wherein the second indication information is used to indicate the spatial filter, and the spatial filter corresponds to the target downlink reference signal.

20. A method for determining a spatial filter, applied to a network device, the method comprising:
determining one or more target downlink reference signals, wherein one or more spatial filters corresponding to the one or more target downlink reference signals are used for downlink transmission between at least one of a plurality of cells and a terminal, and the one or more target downlink reference signals are determined from a second downlink reference signal set based on measurement results, the measurement results being obtained by measuring downlink reference signals in a first downlink reference signal set.

21. The method of claim 20, further comprising:
receiving first indication information from the terminal, wherein the first indication information is used to indicate the target downlink reference signal.

22. The method of claim 21, wherein the second downlink reference signal set comprises at least one second subset, and each second subset corresponds to a Physical Cell Identifier, PCI; and
wherein the first indication information comprises at least one of:
an index of a second subset in which the target downlink reference signal is located;
an index of a PCI corresponding to the second subset in which the target downlink reference signal is located;
an index of the target downlink reference signal;
an index of the spatial filter corresponding to the target downlink reference signal; or
a link quality prediction result corresponding to the target downlink reference signal.

23. The method of claim 20, wherein determining the target downlink reference signal comprises:
receiving the measurement results; and
determining the one or more target downlink reference signals from the second downlink reference signal set based on the measurement results.

24. The method of claim 23, wherein determining the one or more target downlink reference signals from the second downlink reference signal set based on the measurement results comprises:
determining a link quality prediction result corresponding to each downlink reference signal in the second downlink reference signal set based on the measurement results; and
determining the target downlink reference signal based on the link quality prediction result corresponding to each downlink reference signal in the second downlink reference signal set.

25. The method of claim 24, wherein
the target downlink reference signal is a downlink reference signal meeting a condition in the second downlink reference signal set,
wherein the condition comprises: a link quality prediction result is optimal; and/or, the link quality prediction result is greater than a threshold.

26. The method of claim 24 or 25, wherein the measurement results and/or the link quality prediction results comprise at least one of:
a Reference Signal Receiving Power, RSRP, a Signal to Interference plus Noise Ratio, SINR, a Received Signal Strength Indicator, RSSI, or a Reference Signal Receiving Quality, RSRQ.

27. The method of any one of claims 20 to 26, wherein the first downlink reference signal set comprises at least one first subset, and each first subset corresponds to a PCI;
wherein the measurement results comprise: measurement results of measuring downlink reference signals in all or part of first subsets;
wherein the measurement results of measuring downlink reference signals in all of the first subsets comprise: a measurement result corresponding to each downlink reference signal in all of the first subsets; and
wherein the measurement results of measuring downlink reference signals in part of the first subsets comprise: indices of the part of the first subsets or indices of PCIs corresponding to the part of the first subsets, and a measurement result corresponding to each downlink reference signal in the part of the first subsets.

28. The method of any one of claims 23 to 27, wherein determining the link quality prediction result corresponding to each downlink reference signal in the second downlink reference signal set based on the measurement results comprises:
determining, using a neural network model, the link quality prediction result corresponding to each downlink reference signal in the second downlink reference signal set based on the measurement results.

29. The method of claim 28, wherein the first downlink reference signal set comprises at least one first subset,
wherein an input of the neural network model comprises:
a measurement result corresponding to each downlink reference signal in all of first subsets; or,
indices of all or part of the first subsets, and the measurement result corresponding to each downlink reference signal in all or part of the first subsets; and
wherein an output of the neural network model comprises at least one of:
an index of the target downlink reference signal, an index of the spatial filter corresponding to the target downlink reference signal, or a link quality prediction result corresponding to the target downlink reference signal.

30. The method of any one of claims 20 to 29, further comprising:
receiving capability information of the terminal, wherein the capability information comprises:
whether the terminal supports measuring the downlink reference signals in the first downlink reference signal set; and/or
whether the terminal supports determining the one or more target downlink reference signals from the second downlink reference signal set.

31. The method of claim 30, wherein the first downlink reference signal set comprises at least one first subset, and the second downlink reference signal set comprises at least one second subset; wherein each first subset corresponds to one of the plurality of cells, and each second subset corresponds to one of the plurality of cells;
wherein the capability information further comprises at least one of:
a maximum number of first subsets and/or second subsets supported by the terminal on all downlink Carrier Components, CCs, or downlink Bandwidth Parts, BWPs;
a maximum number of first subsets and/or second subsets supported by the terminal on one downlink CC or downlink BWP;
a maximum number of downlink reference signals measureable by the terminal in each first subset; or
a maximum number of target downlink reference signals determinable by the terminal in each second subset.

32. The method of claim 31, wherein
the maximum number of the first subsets supported by the terminal on all downlink CCs or downlink BWPs comprises: a maximum number of first subsets configurable by the terminal on all downlink CCs or downlink BWPs; and/or, a maximum number of first subsets simultaneously measureable by the terminal on all downlink CCs or downlink BWPs; and
the maximum number of the second subsets supported by the terminal on all downlink CCs or downlink BWPs comprises: a maximum number of second subsets configurable by the terminal on all downlink CCs or downlink BWPs.

33. The method of any one of claims 30 to 32, further comprising:
sending first configuration information and/or second configuration information to the terminal, wherein the first configuration information and/or the second configuration information is related to the capability information of the terminal; and
wherein the first configuration information comprises: position information of the downlink reference signals in the first downlink reference signal set; and the second configuration information comprises: position information of downlink reference signals in the second downlink reference signal set.

34. The method of any one of claims 20 to 33, further comprising:
sending second indication information to the terminal, wherein the second indication information is used to indicate the spatial filter, and the spatial filter corresponds to the target downlink reference signal.

35. A method for determining a spatial filter, applied to a network device, the method comprising:
acquiring measurement results of measuring uplink reference signals in a first uplink reference signal set, wherein the first uplink reference signal set comprises uplink reference signals between a plurality of cells and a terminal,
wherein the measurement results are used to determine one or more target uplink reference signals from a second uplink reference signal set, and one or more spatial filters corresponding to the one or more target uplink reference signals are used for uplink transmission between at least one of the plurality of cells and the terminal.

36. The method of claim 35, further comprising:
determining the one or more target uplink reference signal from the second uplink reference signal set based on the measurement results.

37. The method of claim 36, wherein determining the one or more target uplink reference signal from the second uplink reference signal set based on the measurement results comprises:
determining a link quality prediction result corresponding to each uplink reference signal in the second uplink reference signal set based on the measurement results; and
determining the target uplink reference signal based on the link quality prediction result corresponding to each uplink reference signal in the second uplink reference signal set.

38. The method of claim 37, wherein determining the link quality prediction result corresponding to each uplink reference signal in the second uplink reference signal set based on the measurement results comprises:
determining, using a neural network model, the link quality prediction result corresponding to each uplink reference signal in the second uplink reference signal set based on the measurement results.

39. The method of claim 38, wherein the first uplink reference signal set comprises at least one third subset,
wherein an input of the neural network model comprises:
a measurement result corresponding to each uplink reference signal in all or part of third subsets; or
indices of all or part of the third subsets, and the measurement result corresponding to each uplink reference signal in all or part of the third subsets; and
wherein an output of the neural network model comprise at least one of:
an index of the target uplink reference signal, an index of a spatial filter corresponding to the target uplink reference signal, or a link quality prediction result corresponding to the target uplink reference signal.

40. The method of any one of claims 37 to 39, wherein
the target uplink reference signal is an uplink reference signal meeting a condition in the second uplink reference signal set,
wherein the condition comprises: a link quality prediction result is optimal; and/or, the link quality prediction result is greater than a threshold.

41. The method of any one of claims 37 to 40, wherein the measurement results and/or the link quality prediction results comprise at least one of:
a Reference Signal Receiving Power, RSRP, a Signal to Interference plus Noise Ratio, SINR, a Received Signal Strength Indicator, RSSI, or a Reference Signal Receiving Quality, RSRQ.

42. The method of any one of claims 35 to 41, further comprising:
receiving capability information of the terminal, wherein the capability information comprises: whether the terminal supports sending the uplink reference signals in the first uplink reference signal set.

43. The method of claim 42, wherein the first uplink reference signal set comprises at least one third subset, and each third subset corresponds to one of the plurality of cells; and
wherein in a case where the terminal supports sending the uplink reference signals in the first uplink reference signal set, the capability information further comprises at least one of:
a maximum number of third subsets supported by the terminal on all uplink Carrier Components, CCs, or uplink Bandwidth Parts, BWPs;
a maximum number of third subsets supported by the terminal on one uplink CC or uplink BWP; or
a maximum number of uplink reference signals that the terminal is capable of sending in each third subset.

44. The method of claim 43, wherein the maximum number of the third subsets supported by the terminal on all uplink CCs or uplink BWPs comprises:
a maximum number of the third subsets configurable by the terminal on all uplink CCs or uplink BWPs; and/or, a maximum number of third subsets that the terminal is capable of sending simultaneously on all uplink CCs or uplink BWPs.

45. The method of any one of claims 42 to 44, further comprising:
sending third configuration information to the terminal, wherein the third configuration information is related to the capability information of the terminal;
wherein the third configuration information comprises: position information of the uplink reference signals in the first uplink reference signal set.

46. The method of any one of claims 35 to 45, wherein the uplink reference signals comprise: a Sounding Reference Signal, SRS.

47. The method of any one of claims 35 to 46, further comprising:
sending third indication information to the terminal, wherein the third indication information is used to indicate the spatial filter, and the spatial filter corresponds to the target uplink reference signal.

48. A method for determining a spatial filter, applied to a terminal, the method comprising:
sending uplink reference signals in a first uplink reference signal set, wherein the first uplink reference signal set comprises uplink reference signals between a plurality of cells and the terminal,
wherein the uplink reference signals in the first uplink reference signal set are used to determine one or more target uplink reference signals from a second uplink reference signal set, and one or more spatial filters corresponding to the one or more target uplink reference signals are used for uplink transmission between at least one of the plurality of cells and the terminal.

49. The method of claim 48, further comprising:
sending capability information of the terminal to a network device, wherein the capability information comprises: whether the terminal supports sending the uplink reference signals in the first uplink reference signal set.

50. The method of claim 49, wherein the first uplink reference signal set comprises at least one third subset, and each third subset corresponds to one of the plurality of cells; and
wherein in a case where the terminal supports sending the uplink reference signals in the first uplink reference signal set, the capability information further comprises at least one of:
a maximum number of third subsets supported by the terminal on all uplink Carrier Components, CCs, or uplink Bandwidth Parts, BWPs;
a maximum number of third subsets supported by the terminal on one uplink CC or uplink BWP; or
a maximum number of uplink reference signals that the terminal is capable of sending in each third subset.

51. The method of claim 50, wherein the maximum number of the third subsets supported by the terminal on all uplink CCs or uplink BWPs comprises:
a maximum number of the third subsets configurable by the terminal on all uplink CCs or uplink BWPs; and/or, a maximum number of third subsets that the terminal is capable of sending simultaneously on all uplink CCs or uplink BWPs.

52. The method of any one of claims 49 to 51, further comprising:
receiving third configuration information from the network device, wherein the third configuration information is related to the capability information of the terminal; and
wherein the third configuration information comprises: position information of the uplink reference signals in the first uplink reference signal set.

53. The method of any one of claims 48 to 52, wherein the uplink reference signals comprise: a Sounding Reference Signal, SRS.

54. The method of any one of claims 48 to 53, further comprising:
receiving third indication information from a network device, wherein the third indication information is used to indicate the spatial filter, and the spatial filter corresponds to the target uplink reference signal.

55. An apparatus for determining a spatial filter, comprising:
a first acquiring module, configured to acquire measurement results of measuring downlink reference signals in a first downlink reference signal set, wherein the first downlink reference signal set comprises downlink reference signals between a plurality of cells and the apparatus;
wherein the measurement results are used to determine one or more target downlink reference signals from a second downlink reference signal set, and one or more spatial filters corresponding to the one or more target downlink reference signals are used for downlink transmission between at least one of the plurality of cells and the apparatus.

56. An apparatus for determining a spatial filter, comprising:
a determining module, configured to determine one or more target downlink reference signals, wherein one or more spatial filters corresponding to the one or more target downlink reference signals are used for downlink transmission between at least one of a plurality of cells and a terminal; and the one or more target downlink reference signals are determined from a second downlink reference signal set based on measurement results, the measurement results being obtained by measuring downlink reference signals in a first downlink reference signal set.

57. An apparatus for determining a spatial filter, comprising:
a second acquiring module, configured to acquire measurement results of measuring uplink reference signals in a first uplink reference signal set, wherein the first uplink reference signal set comprises uplink reference signals between a plurality of cells and a terminal,
wherein the measurement results are used to determine one or more target uplink reference signals from a second uplink reference signal set, and one or more spatial filters corresponding to the one or more target uplink reference signals are used for uplink transmission between at least one of the plurality of cells and the terminal.

58. An apparatus for determining a spatial filter, comprising:
a first sending module, configured to send uplink reference signals in a first uplink reference signal set, wherein the first uplink reference signal set comprises uplink reference signals between a plurality of cells and a terminal;
wherein the uplink reference signals in the first uplink reference signal set are used to determine one or more target uplink reference signals from a second uplink reference signal set, and one or more spatial filters corresponding to the one or more target uplink reference signals are used for uplink transmission between at least one of the plurality of cells and the terminal.

59. A communication device, comprising:
a memory, configured to store computer executable instructions; and
a processor, connected to the memory, configured to execute the computer executable instructions to implement the method of any one of claims 1 to 19, or the method of any one of claims 20 to 34, or the method of any one of claims 35 to 47, or the method of any one of claims 48 to 54.

60. A chip, comprising:
a processor, configured to call and execute a computer program from a memory to cause a device equipped with the chip to implement the method of any one of claims 1 to 19, or the method of any one of claims 20 to 34, or the method of any one of claims 35 to 47, or the method of any one of claims 48 to 54.

61. A computer-readable storage medium, having stored thereon a computer program, wherein the computer program is executed by at least one processor to implement the method of any one of claims 1 to 19, or the method of any one of claims 20 to 34, or the method of any one of claims 35 to 47, or the method of any one of claims 48 to 54.
